# EUROPEAN PATENT SPECIFICATION

(11) **EP 2 487 078 B1**
(45) Date of publication and mention of the grant of the patent: **22.05.2013**
(21) Application number: 11153837.7
(22) Date of filing: 09.02.2011
(51) Int. Cl.: B60T 7/06, B60T 7/08, B60T 7/10

(54) **Working Vehicle**
Arbeitsfahrzeug
véhicule de travail

(43) Date of publication of application: 15.08.2012
(73) Proprietor: Yanmar Co. Ltd., Osaka-shi, Osaka 530-0013 (JP)
(72) Inventor: Matsubayashi, Toshikazu, Osaka-shi Osaka 530-0013 (JP); Shibaoka, Junko, Osaka-shi Osaka 530-0013 (JP); Fukumoto, Takeshi, Osaka-shi Osaka 530-0013 (JP)
(74) Representative: Isarpatent

(56) References cited:
- JP-A- 8 156 755
- JP-A- 2006 056 422
- US-A- 4 004 665

## Description

### BACKGROUND OF THE INVENTION

### Field of the Invention

The present invention relates to a working vehicle includes a parking brake operation member for integrally operating a pair of first and second brake units on the right and left sides as well as first and second brake operation members for independently operating the first and second brake units..

### Related Art

As conventionally known, in a working vehicle including a pair of first and second brake units on the right and left sides which are capable of applying braking forces respectively to a pair of right and left rear wheels functioning as driving wheels, and first and second brake operation members used for independently operating the first and second brake units, there is also included a parking brake operation member used for integrally operating the first and second brake units (see, for example, Japanese Unexamined Patent Publication No. 2006-056422, which is hereinafter referred to as Prior Art Document).

More specifically, the working vehicle described in Prior Art Document includes first and second brake operation mechanisms that operatively connect the first and second brake operation members to the first and second brake units, respectively, and a parking brake operation mechanism that operatively connects the parking brake operation member to the first and second brake operation mechanisms.

The first brake operation mechanism operatively connects the first brake operation member to the first brake unit so as to bring the first brake unit into the brake actuating state when the first brake operation member is manually operated, and the second brake operation mechanism operatively connects the second brake operation member to the second brake unit so as to bring the second brake unit into the brake actuating state when the second brake operation member is manually operated.

The parking brake operation mechanism operatively connects the parking brake operation member to the first and second brake operation mechanisms so as to bring both the first and second brake units into the brake actuating states when the parking brake operation member is manually operated.

In Prior Art Document, the first and second brake operation members are embodied as pedals that are disposed in front of a driver's seat.
There are further disposed forward and backward travel pedals, which function as main speed-change operation members, in front of the driver's seat and on the right side of the vehicle in the width direction.
The parking brake operation member is embodied as a lever and is disposed such that the member itself is located on the right side of the driver's seat in the vehicle width direction and a free end thereof functioning as a grip portion is located between a steering wheel and the driver's seat in the vehicle longitudinal direction.

The working vehicle described in Prior Art Document, which adopts the arrangement of the operation members, is useful in that the parking brake operation member can be provided while effectively preventing deterioration in operability of the other operation members such as the forward and backward travel pedals and the first and second brake operation members.

However, Prior Art Document poses a problem that the work is complicated for adjusting the relationship between the operation position of the parking brake operation member and the actuation states of the first and second brake units.

In more detail, the parking brake operation mechanism is configured such that the first and second brake units are brought into the brake release states when the parking brake operation member is located at the brake release position, and that the first and second brake units are shifted from the brake release states into the brake actuating states as the parking brake operation member is shifted from the brake release position into the brake actuating direction.

In this configuration, in response to the specifications or the demands, there are a case where the parking brake operation mechanism needs to be adjusted such that the first and second brake units start to exert braking forces immediately after the parking brake operation member is shifted from the brake release position into a direction toward the brake actuating position, and a case where the parking brake operation mechanism needs to be adjusted such that the first and second brake units start to exert braking forces after the parking brake operation member is shifted from the brake release position into the direction toward the brake actuating position by a predetermined amount.

However, in the working vehicle described in Prior Art Document, the parking brake operation mechanism is entirely disposed below a step board and fenders of the working vehicle, which therefore complicates the adjustment work.

### SUMMARY OF THE INVENTION

The present invention is made in view of the prior art, and it is an object to provide a working vehicle including first and second brake units capable of applying brake forces independently to a pair of first and second rear wheels on right and left sides, first and second brake operation members for operating the first and second brake units, respectively, and a parking brake operation member for integrally operating the first and second brake units, the working vehicle being capable of easily adjusting a relationship between an operating position of the parking brake operation member and actuating states of the first and second brake units..

In order to achieve the object, the present invention provides a working vehicle including first and second brake operation members capable of being manually operated, first and second brake operation mechanism that operatively and respectively connects the first and second brake operation members to first and second brake units that are respectively positioned on first and second sides in a vehicle width direction, a parking brake operation member capable of being manually operated, and a parking brake operation mechanism that operatively connects the parking brake operation member to the first and second brake operation mechanisms, wherein the parking brake operation member is disposed on the first side of a driver's seat in the vehicle width direction, wherein the parking brake operation mechanism includes an operating-side link that is operatively connected to the parking brake operation member so as to be moved along its axis line in accordance with a manual operation to the parking brake operation member, a first actuating-side link that has a lower end operatively connected to the first brake operation mechanism, a second actuating-side link that has a lower end operatively connected to the second brake operation mechanism, a pressing member that is supported by the operating-side link in a relatively movable manner along the axis line with respect thereto so as to face upper ends of the first and second actuating-side links, and a retaining member that is supported by the operating-side link so as to be relatively immovable along the axis line with respect thereto and have its fixed position adjustable along the axis line of the operating-side link in a state where the pressing member is interposed between the retaining member and the upper ends of the first and second actuating-side links, wherein, when the operating-side link is shifted into a brake actuating direction that is a first side in the axis line direction thereof in accordance with a brake operation to the parking brake operation member, the retaining member, which is shifted together with the operating-side link, operatively presses into the brake actuating directions both the first and second actuating-side links via the pressing member, and wherein the operating-side link, which supports the pressing member and the retaining member, is aligned in a vehicle longitudinal direction within a space between the driver's seat and a fender covering an upper end of a rear wheel (21) that is positioned on the first side in the vehicle width direction

The working vehicle with the above configuration makes it possible to access to the retaining member without detaching components such as the driver's seat and a step board so as to adjust a fixed position of the retaining member with respect to an axis line direction of the operating-side link
Accordingly, it is possible to improve workability in adjusting the relationship of the operation position of the parking brake operation member with respect to the actuation states of the first and second brake units.

Preferably, the first brake operation mechanism may include a first brake actuation shaft that is aligned in the vehicle width direction and switches the actuation states of the first brake unit between the brake actuating state and the brake release state in accordance with the axial rotation thereof, and a first brake actuation arm that is supported by the first brake actuation shaft in a relatively non-rotatable manner with respect thereto, and the second brake operation mechanism may include a second brake actuation shaft that is aligned in the vehicle width direction and switches the actuation states of the second brake unit between the brake actuating state and the brake release state in accordance with the axial rotation thereof, and a second brake actuation arm that is supported by the second brake actuation shaft in a relatively non-rotatable manner with respect thereto.

In this configuration, the parking brake operation mechanism may include a parking brake rotary shaft that is aligned in the vehicle width direction and is supported in a rotatable manner about its axis line, a first brake connecting member that has a lower end operatively connected to the first brake actuation arm, and a second brake connecting member that has a lower end operatively connected to the second brake actuation arm. An upper end of the first brake connecting member is operatively connected to the first actuating-side link that has a proximal end supported by the parking brake rotary shaft in a relatively rotatable manner with respect thereto, while an upper end of the second brake connecting member is operatively connected to the parking brake rotary shaft by which a proximal end of the second actuating-side link is supported in a relatively non-rotatable manner with respect thereto. The first and second actuating-side links are rotated into a brake actuating directions and a brake release directions around the axis line of the parking brake rotary shaft.
The configuration makes it possible to stabilize the movement of the first and second actuating-side links.

In a preferable embodiment, the parking brake rotary shaft is disposed between the driver's seat and a transmission, which is provided with the first and second brake units, with respect to the vertical direction.
The configuration makes it possible to dispose the parking brake rotary shaft with utilizing a dead space.

In one embodiment, the pressing member may have a main body portion provided with a central through hole through which the operating-side link is inserted in a movable manner along the axis line, and the parking brake operation mechanism may include an operating-side spacer that is supported by the operating-side link in a relatively movable manner along the axis line thereof with respect thereto so as to be located between the main body portion of the pressing member and the retaining member.
In this configuration, when the operating-side link is moved into the brake actuating direction in the axis line, the retaining member presses the first and second actuating-side links into the brake actuating directions about the axis line of the parking brake rotary shaft via the operating-side spacer and the pressing member.

Preferably, the main body portion of the pressing member is provided, in addition to the central through hole, with a first through hole (633a), that is opened in the vehicle longitudinal direction on the first side of the central through hole in the vehicle width direction so as to face the upper end of the first actuating-side link, and a second through hole that is provided on the second side of the central through hole in the vehicle width direction so as to face the upper end of the second actuating-side link. The first and second actuating-side links are provided at the upper ends with engagement portions that are provided with through holes so as to face the first and second through holes, respectively.

In this case, the pressing member may further include a first connecting shaft, a second connecting shaft, a first spacer and a second spacer. The first connecting shaft has a first end inserted through the first through hole in a relatively movable manner along an axis line with respect thereto and a second end inserted through the through hole in the first actuating-side link in a relatively movable manner along an axis line with respect thereto, and connects the main body portion and the first actuating-side link in a state where they are relatively movable to each other only within a predetermined distance. The second connecting shaft has a first end inserted through the second through hole in a relatively movable manner along an axis line with respect thereto and a second end inserted through the through hole in the second actuating-side link in a relatively movable manner along an axis line with respect thereto, and connects the main body portion and the second actuating-side link in a state where they are relatively movable to each other only within a predetermined distance. The first spacer is externally mounted to the first connecting shaft so as to be located between the main body portion and the engagement portion of the first actuating-side link as well as to be relatively movable along the axis line with respect thereto. The second spacer is externally mounted to the second connecting shaft so as to be located between the main body portion and the engagement portion of the second actuating-side link as well as to be relatively movable along the axis line with respect thereto.

In the configuration , when the operating-side link is axially moved into the brake actuating direction in the axis line direction in accordance with the braking operation of the parking brake operation member, the retaining member, which is shifted together with the operating-side link, presses the first and second actuating-side links into the brake actuating directions about the parking brake rotary shaft via the operating-side spacer, the main body portion of the pressing member and the first and second spacers, while, when the first or second brake operation member is operated, corresponding one of the first and second actuating-side links is shifted into the brake actuating direction about the parking brake rotary shaft relatively to the main body portion with being continuously connected with the main body portion via corresponding one of the first and second connecting shafts.

The configuration makes it possible to stabilize the movement of the first and second actuating-side links, while causing the first and second actuating-side links to be moved into the brake actuating directions via the pressing member when the parking brake operation member is manually operated into the brake actuating direction and causing the first and second actuating-side links to be moved into the brake actuating directions without the pressing member being pressed when at least one of the first and second brake operation members is manually operated into the brake actuating direction.

Preferably, the first brake operation member may include a first support rod (310) and a first pedal main body (311), the first support rod having a proximal end supported by a brake operation shaft (425), which is disposed below a step board (100) and is aligned in the vehicle width direction, in a relatively rotatable manner with respect thereto and a distal end extending upward so as to be above the step board on the first side in the vehicle width direction, the first pedal main body being supported by the distal end of the first support rod

The first brake operation mechanism may include a first brake operation arm and a first brake connecting shaft. The first brake operation arm is non-rotatable relatively to the first brake operation member about the axis line of the brake operation shaft. The first brake connecting shaft has a front end connected to the first brake operation arm and a rear end connected to the first brake actuation arm. The second brake operation mechanism may include the brake operation shaft, a second brake operation arm and a second brake connecting shaft. The second brake operation arm is disposed on the second side of the brake operation shaft in the vehicle width direction in a state of being relatively non-rotatable with respect to the brake operation shaft about the axis thereof. The second brake connecting shaft has a front end connected to the second brake operation arm and a rear end connected to the second brake actuation arm.

The first brake connecting shaft may be formed at the front end with an elongated hole, and the first brake operation arm may be provided with an engagement pin that is engaged into the elongated hole. The first brake operation arm and the first brake connecting shaft may be connected to each other via the elongated hole and the engagement pin so that the first brake operation arm is prevented from being moved at the time when the first brake connecting shaft is moved into the brake actuating direction along the axis line direction in accordance with the brake operation to the parking brake operation member while the first brake connecting shaft is moved into the brake actuating direction along the axis line direction in accordance with the brake operation to the first brake operation member.

The second brake connecting shaft may be formed at the front end with an elongated hole, and the second brake operation arm may be provided with an engagement pin that is engaged into the elongated hole. The second brake operation arm and the second brake connecting shaft may be connected to each other via the elongated hole and the engagement pin so that the second brake operation arm is prevented from being moved at the time when the second brake connecting shaft is moved into the brake actuating direction along the axis line direction in accordance with the brake operation to the parking brake operation member while the second brake connecting shaft is moved into the brake actuating direction along the axis line direction in accordance with the brake operation to the second brake operation member.

The configuration allows the corresponding one of the first and second brake connecting shafts to be moved into the brake actuating direction when the first or second brake operation member is manually operated into the brake actuating direction, while allowing the first and second brake connecting shafts to be moved into the brake actuating direction without the first and second brake operation members being moved when the parking brake operation member is manually operated into the brake actuating direction.

For example, the parking brake operation member may be supported so as to be rotatable about a parking brake operation reference axis extending in the vehicle width direction in a state where at least a distal end serving as a grip portion is exposed outward from the fender. The parking brake operation mechanism may include a parking brake operating-side intermediate shaft that is supported so as to be along the vehicle width direction with an inner end thereof protruding from an inner side surface of the fender into the space, the parking brake operating-side intermediate shaft being rotated about the axis line into the brake actuating direction as the parking brake operation member is shifted about the reference axis from the brake release position to the brake actuating position.
In this case, the operating-side link is operatively connected to the parking brake operating-side intermediate shaft so as to be shifted along the axis line into the brake actuating direction in accordance with a rotation of the parking brake operating-side intermediate shaft around the axis line into the brake actuating direction.

### BRIEF DESCRIPTION OF THE DRAWINGS

The present invention will become apparent from a following description regarding a preferred embodiment thereof in conjunction with the accompanying drawings wherein, in addition to the objects and advantages.
Fig. 1 is a side view of a working vehicle according to one embodiment of the present invention.
Fig. 2 is a plan view of the working vehicle.
Fig. 3 is an upper perspective view of an assembly inclusive of a transmission in the working vehicle.
Fig. 4 is a lower perspective view of the assembly.
Fig. 5 is a plan view of the assembly.
Fig. 6 is an enlarged plan view of a driver's seat and the vicinity thereof in the working vehicle.
Fig. 7 is a partially enlarged perspective view of the working vehicle in a state where the driver's seat is detached therefrom.
Fig. 8 is a side view, as vied from a first side in a vehicle width direction, of the assembly in a state where a step board, a vehicle frame and a clutch pedal are detached therefrom.
Fig. 9 is a side view, as viewed from a second side in the vehicle width direction of the assembly shown in Fig. 8.
Fig. 10 is a perspective view of first and second brake operation members and the vicinity thereof in the working vehicle.
Fig. 11 is a perspective view of a parking brake operation member and the vicinity thereof in the working vehicle.
Fig. 12 is a sectional view taken along line XII-XII indicated in Fig. 8.
Fig. 13 is an enlarged plan view of the working vehicle in a state where a top cover is detached from a dashboard.
Fig. 14 is an exploded partial perspective view of the working vehicle in a state shown in Fig. 13.
Fig. 15 is an enlarged perspective view of a rearview mirror and the vicinity thereof in the working vehicle.
Fig. 16 is an exploded perspective view of the working vehicle in a state where the rearview mirror is attached on an opposite side in the vehicle width direction.

### DETAILED DESCRIPTION OF THE PREFERRED EMBODIMENTS

Described below is a working vehicle according to a preferred embodiment of the present invention with reference to the accompanying drawings.

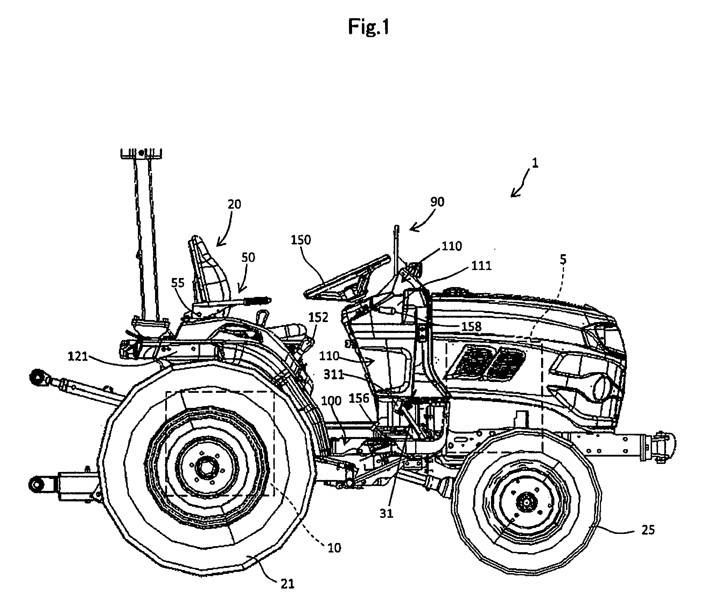

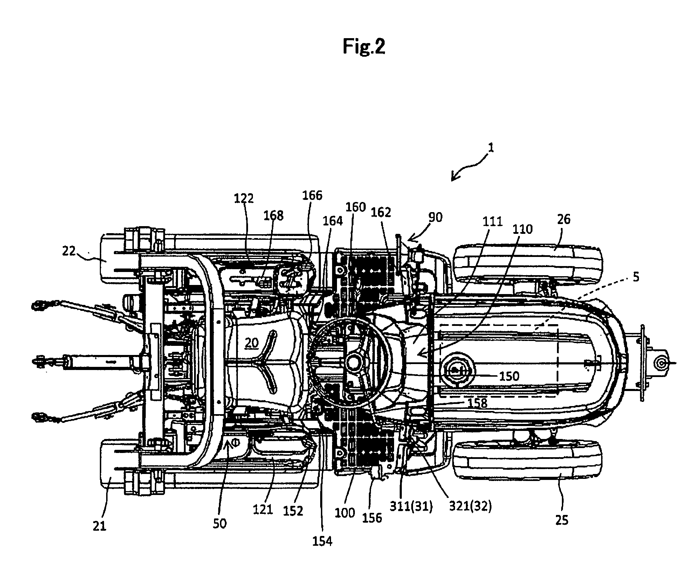

Figs. 1 and 2 are a side view and a plan view, respectively, of a working vehicle 1 according to the present embodiment.

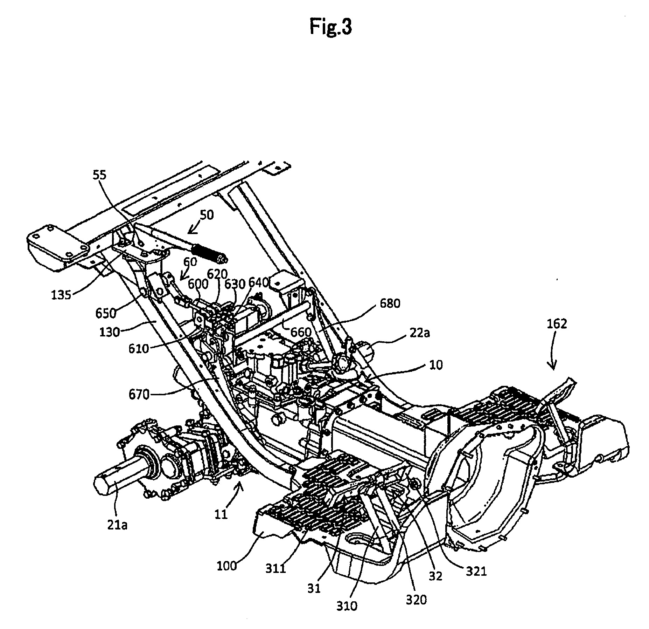

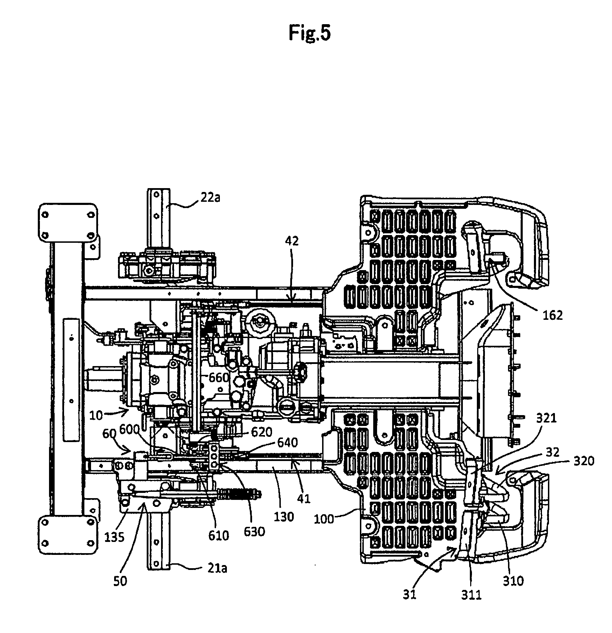

Figs. 3 to 5 are an upper perspective view, a lower perspective view, and a plan view, respectively, of an assembly inclusive of a transmission in the working vehicle.

As shown in Figs. 1 to 5, the working vehicle 1 includes a driving power source 5, a transmission 10, a driver's seat 20, a pair of first and second brake operation members 31 and 32 on the right and left sides, first and second brake operation mechanisms 41 and 42, a parking brake operation member 50, and a parking brake operation mechanism 60. The transmission 10 changes the speed of a rotational power that is transmitted from the driving power source 5, and outputs the rotational power to a pair of first and second rear wheels 21 and 22 on the right and left sides functioning as main driving wheels, and the transmission 10 is provided with a pair of first and second brake units 11 and 12 on the right and left sides which are capable of applying braking forces independently to the first and second rear wheels 21 and 22. The driver's seat 20 is disposed above the transmission 10. The first and second brake operation members 31 and 32 can be manually operated independently from each other. The first and second brake operation mechanisms 41 and 42 operatively connect the first and second brake operation members 31 and 32 to the first and second brake units 11 and 12, respectively. The parking brake operation member 50 can be manually operated. The parking brake operation mechanism 60 operatively connects the parking brake operation member 50 to the first and second brake operation mechanisms 41 and 42.

As shown in Figs. 3 to 5, the first and second brake units 11 and 12 are respectively disposed on a first side (the right side in the forward travel direction in the present embodiment) and on a second side (the left side in the forward travel direction in the present embodiment) of the transmission 10 in the vehicle width direction. The first and second brake units 11 and 12 are capable of applying braking forces to corresponding first and second axles 21a and 22a, respectively.

The first and second brake units 11 and 12 can be embodied in various configurations as long as being capable of applying braking forces independently to the corresponding axles 21a and 22a.
In a case where each of the first and second brake units 11 and 12 is of a friction plate type, the first and second brake units 11 and 12 may respectively have driving-side friction plates operatively connected to the corresponding driving axles 21a and 22a, fixed-side friction plates disposed so as to face the corresponding driving-side friction plates, and pressing members that cause the driving-side friction plates and the fixed-side friction plates to be pressed against each other (not shown).

The first and second brake operation members 31 and 32 are disposed in the vicinity of the driver's seat 20 so as to be operated independently from each other.
The first and second brake operation members 31 and 32 may be embodied in various configurations. In the present embodiment, as shown in Figs. 1 to 5, the first and second brake operation members 31 and 32 are embodied as pedals.

The first and second brake operation members 31 and 32 are disposed in the vicinity of the driver's seat 20 so as to be operated by an operator who sits on the driver's seat 20.
In the present embodiment, as shown in Figs. 2 to 5, the first and second brake operation members 31 and 32 are disposed in front of the driver's seat 20 as well as on an identical side of the vehicle in the width direction (on the first side of the vehicle in the width direction).

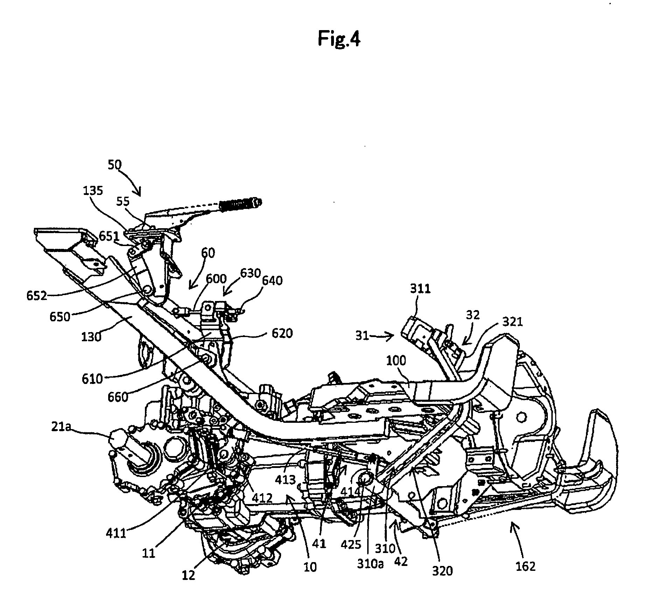

As shown in Fig. 4, in the working vehicle 1, the first and second brake operation members 31 and 32 are supported by a brake operation shaft 425 to be described later, which is disposed below a step board 100 and is aligned in the vehicle width direction.

More specifically, the first brake operation member 31 is provided with a first support rod 310 and a first pedal main body 311. The first support rod 310 has a proximal end supported by the brake operation shaft 425 in a relatively rotatable manner with respect thereto and a distal end extending upward so as to be above the step board 100 on the first side in the vehicle width direction. The first pedal main body 311 is supported by the distal end of the first support rod 310.

The second brake operation member 32 is provided with a second support rod 320 and a second pedal main body 321. The second support rod 320 has a proximal end supported by the brake operation shaft 425 in a relatively non-rotatable manner with respect thereto and a distal end extending upward so as to be above the step board 100 and be aligned with the distal end of the first support rod 310 in the vehicle width direction. The second pedal main body 321 is supported by the distal end of the second support rod 320.

As shown in Figs. 1 and 2, in the present embodiment, the first and second brake operation members 31 and 32 are disposed such that the first and second pedal main bodies 311 and 321 are located on the first side of a dashboard 110 in the vehicle width direction.

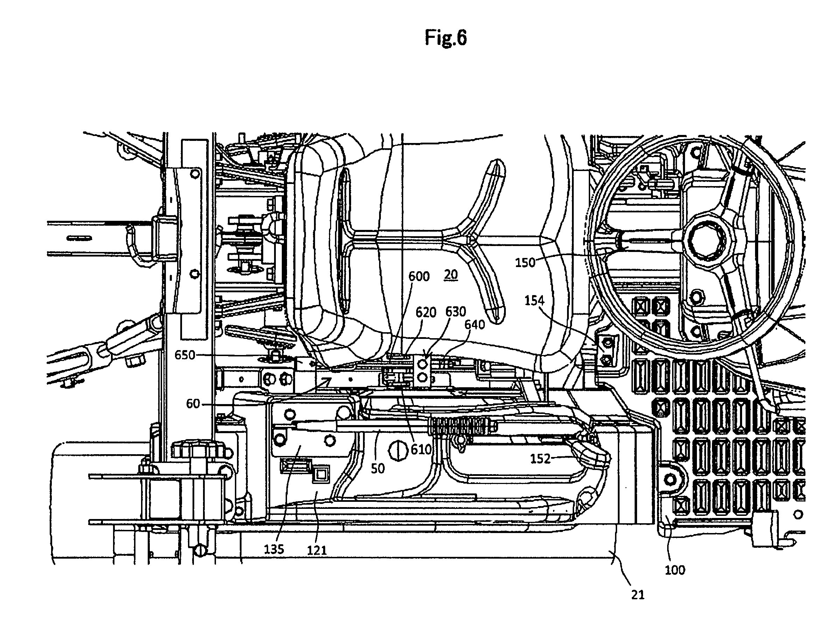

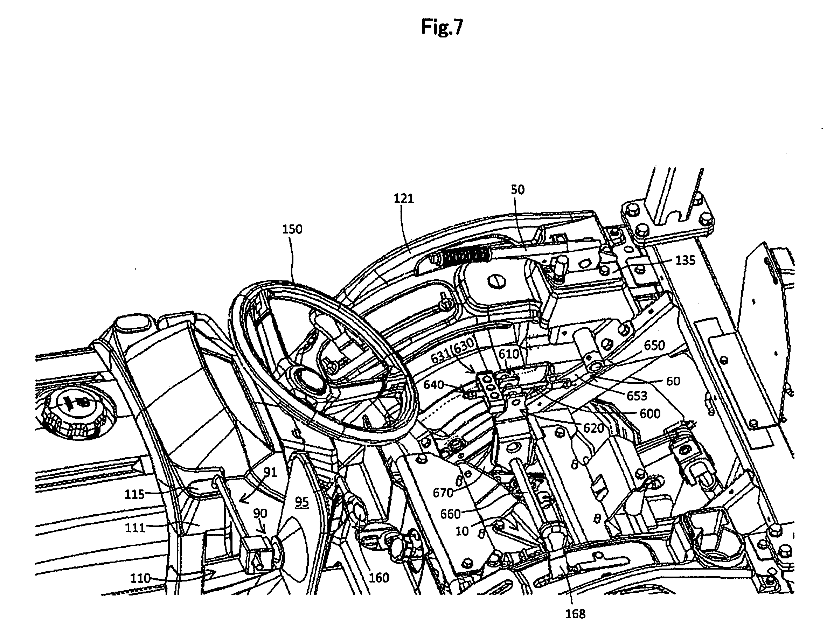

Fig. 6 is a partially enlarged plan view of the driver's seat 20 and the vicinity thereof.
Further, Fig. 7 is a partially enlarged perspective view of the working vehicle 1 in a state where the driver's seat 20 is detached therefrom.
As shown in Figs. 1, 2, 6, and 7, the parking brake operation member 50 is disposed on the first side of the driver's seat 20 in the vehicle width direction.

More specifically, as shown in Figs. 1, 2, 6, and 7, the working vehicle 1 includes first and second fenders 121 and 122 that cover upper portions of the pair of first and second rear wheels 21 and 22, respectively.
The parking brake operation member 50 is supported so as to be rotatable about a parking brake operation reference axis extending in the vehicle width direction in a state where at least the distal end serving as the grip portion is exposed outward from the first fender 121.

In the present embodiment, as shown in Figs. 3 to 5, the parking brake operation member 50 is supported by a bracket 135 that is fixed to a vehicle frame 130 via a parking brake operation shaft 55 that configures the parking brake operation reference axis.

The working vehicle 1 according to the present embodiment includes various operation members in addition to the first and second brake operation members 31 and 32 and the parking brake operation member 50.
As shown in Figs. 1 and 2, these various operation members include a steering wheel 150, a working device lift lever 152, a differential lock pedal 154, an accelerator pedal 156, an accelerator lever 158, a main speed-change operation lever 160, a clutch pedal 162, a 2WD/4WD switch lever 164, a sub speed-change operation lever 166, and a PTO on/off lever 168.

The steering wheel 150 is a member used for controlling wheels to be steered (a pair of right and left front wheels 25 and 26 in the present embodiment) and is mounted to a steering wheel shaft that extends upward from the dashboard 110.

The working device lift lever 152 is a member used for operating a working device lift unit that is installed to the working vehicle 1. The working device lift lever 152 is disposed so that a grip portion is located in front of the parking brake operation member 50 and extends upward from a top surface of the first fender 121.

The differential lock pedal 154 is a member used for locking a differential transmission function of a differential gear mechanism provided in the working vehicle 1. The differential lock pedal 154 has a pedal main body that is disposed on the first side of the driver's seat 20 in the vehicle width direction as well as immediately below the driver's seat 20 and extends upward from the step board 100.

The accelerator pedal 156 and the accelerator lever 158 are members used for changing an output of an engine functioning as the driving power source 5. The accelerator pedal 156 is disposed so that a pedal main body extends upward from the step board 100 on the first side of the step board 100 in the vehicle width direction. The accelerator lever 158 is disposed so that a grip portion extends outward from a side surface of the dashboard 110 that is positioned on the first side in the vehicle width direction.

The clutch pedal 162 is a member used for blocking the power transmission from the driving power source 5 to the driving wheels. The clutch pedal 162 is disposed so that a pedal main body is located above the step board 100 on the second side of the dashboard 110 in the vehicle width direction.
In the present embodiment, as shown in Fig. 4, the clutch pedal 162 is supported by the brake operation shaft 425 in a relatively rotatable manner with respect thereto.

The main speed-change operation lever 160 is a member used for operating a main speed-change device included in the transmission 10. The main speed-change operation lever 160 is disposed so that a grip portion extends outward from the side surface of the dashboard 110 that is positioned on the second side in the vehicle width direction.

The sub speed-change operation lever 166 is a member used for operating a sub speed-change device included in the transmission 10. The sub speed-change operation lever 166 is disposed so that a grip portion extends outward from a top surface of the second fender 122 located on the second side in the vehicle width direction.

The 2WD/4WD switch lever 164 is a member used for switching between a 2WD (two-wheel drive) state and a 4WD (four-wheel drive) state. In the 2WD state, a driving power that is transmitted from the driving power source 5 via the transmission 10 is transmitted only to the main driving wheels (the rear wheels 21 and 22 in the present embodiment). In the 4WD state, the driving power is transmitted to both the main driving wheels and the sub driving wheels (the front wheels 25 and 26 in the present embodiment). The 2WD/4WD switch lever 164 is disposed so that a grip portion extends upward from the step board 100 at an area that is located on the second side of the driver's seat 20 in the vehicle width direction as well as immediately below the driver's seat 20.

The PTO on/off lever 168 is a member used for turning on/off the power transmission from the driving power source 5 to a PTO shaft. The PTO on/off lever 168 is disposed so that a grip portion extends outward from the top surface of the second fender 122 at an area that is located behind the grip portion of the sub speed-change operation lever 166.

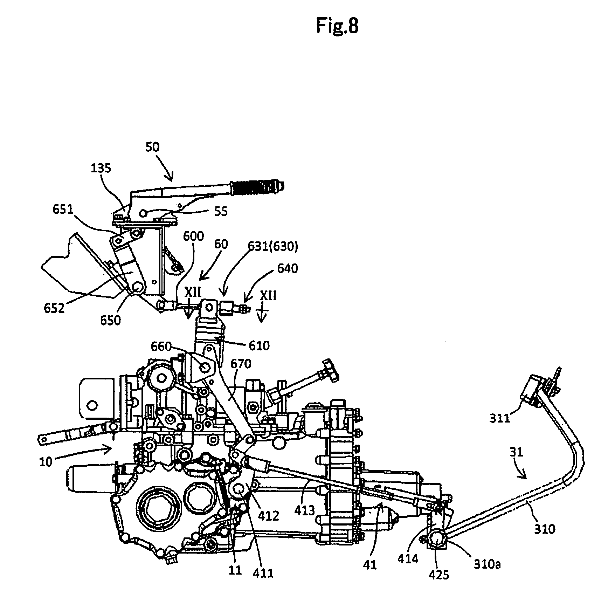

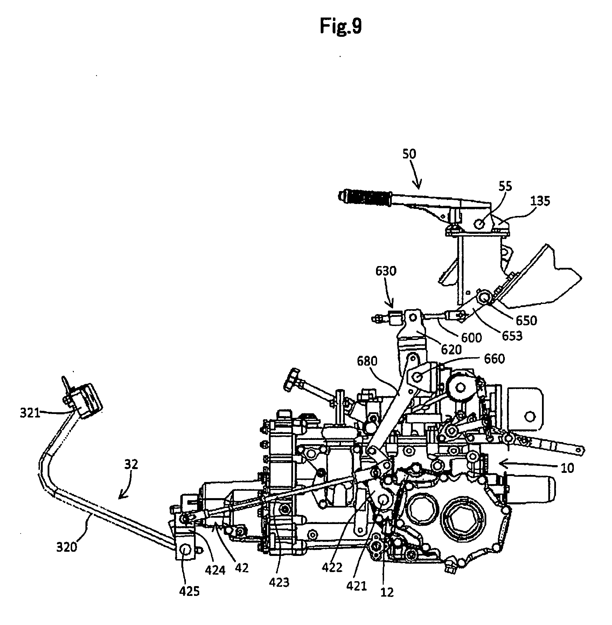

Figs. 8 and 9 are side views, seen respectively from the first and second sides in the vehicle width direction, of the assembly in a state where the step board 100, the vehicle frame 130, and the clutch pedal 162 are detached therefrom.

As shown in Figs. 4 and 8, the first brake operation mechanism 41 includes a first brake actuation shaft 411 and a first brake actuation arm 412. The first brake actuation shaft 411 is aligned in the vehicle width direction and switches the actuation states of the first brake unit 11 between the brake actuating state and the brake release state in accordance with the axial rotation thereof. The first brake actuation arm 412 is supported by the first brake actuation shaft 411 in a relatively non-rotatable manner with respect thereto, and is operatively connected to the first brake operation member 31.

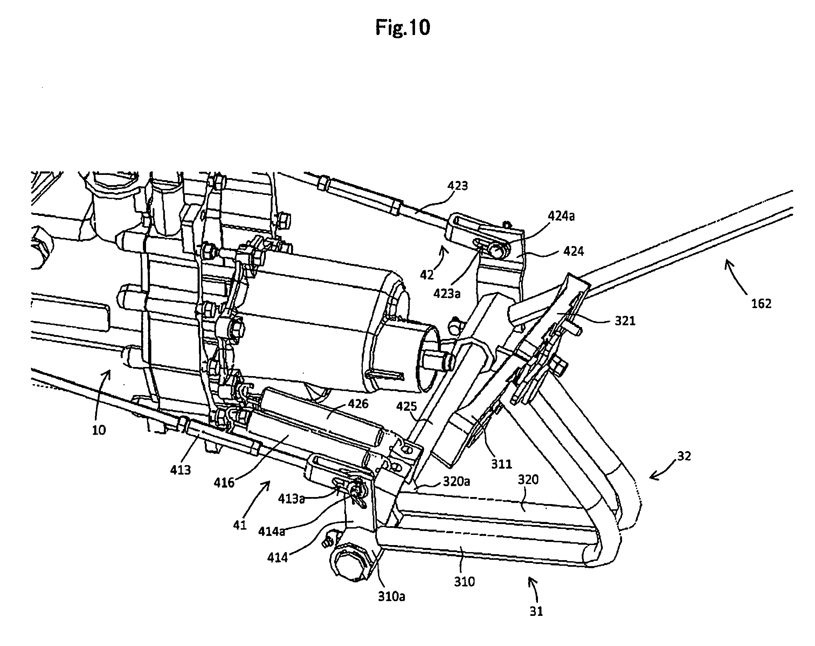

Fig. 10 is a perspective view of the brake operation shaft 425 and the vicinity thereof.
In the present embodiment, as shown in Figs. 4, 8, 10, and the like, the first brake operation mechanism 41 further includes a first brake operation arm 414 and a first brake connecting shaft 413. The first brake operation arm 414 is non-rotatable relatively to the first brake operation member 31 about the axis line of the brake operation shaft 425. The first brake connecting shaft 413 has a front end connected to the first brake operation arm 414 and a rear end connected to the first brake actuation arm 412.

In the present embodiment, the first support rod 310 of the first brake operation member 31 is provided at the proximal end with a boss portion 310a that is externally mounted to the brake operation shaft 425 in a relatively rotatable manner with respect thereto, and the first brake operation arm 414 is provided integrally with the boss portion 310a.

As shown in Fig. 9, the second brake operation mechanism 42 includes a second brake actuation shaft 421 and a second brake actuation arm 422. The second brake actuation shaft 421 is aligned in the vehicle width direction and switches the actuation states of the second brake unit 12 between the brake actuating state and the brake release state in accordance with the axial rotation thereof. The second brake actuation arm 422 is supported by the second brake actuation shaft 421 in a relatively non-rotatable manner with respect thereto, and is operatively connected to the second brake operation member 32.

In the present embodiment, the brake operation shaft 425, to which the second brake operation member 32 is connected in a relatively non-rotatable manner with respect thereto, is one of the components of the second brake operation mechanism 42.
In more detail, as shown in Figs. 4 and 10, the second brake operation mechanism 42 further includes the brake operation shaft 425, a second brake operation arm 424, and a second brake connecting shaft 423. The second brake operation arm 424 is disposed on the second side of the brake operation shaft 425 in the vehicle width direction so as to be non-rotatable relatively to the brake operation shaft 425 about the axis thereof. The second brake connecting shaft 423 has a front end connected to the second brake operation arm 424 and a rear end connected to the second brake actuation arm 422.

In the present embodiment, the second support rod 320 of the second brake operation member 32 is provided at the proximal end thereof with a boss portion 320a that is externally mounted to the brake operation shaft 425 in a relatively non-rotatable manner with respect thereto.

Further, in the present embodiment, the first and second brake operation mechanisms 41 and 42 are provided with return springs 416 and 426 that bias the corresponding first and second brake operation members 31 and 32 toward the brake release positions.

In the following, the parking brake operation mechanism 60 is described in detail.

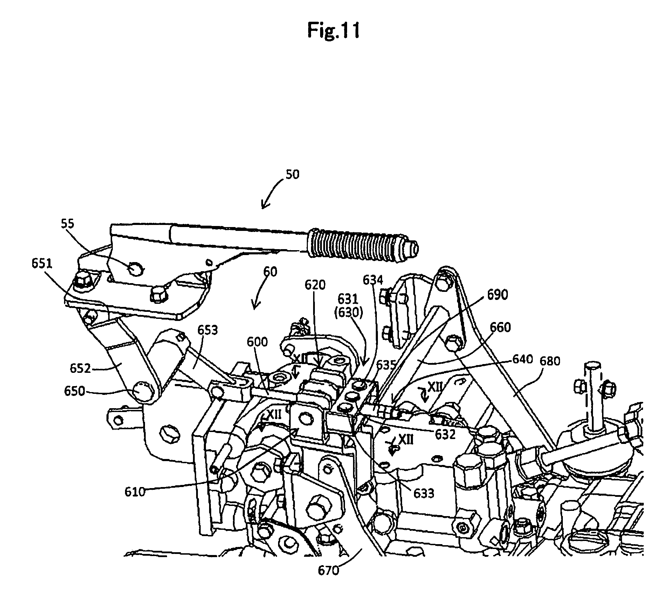

Fig. 11 is a perspective view of the parking brake operation member 50 and the vicinity thereof. It is noted that Fig. 11 does not show the first fender 121, the vehicle frame 130, and the driver's seat 20 for the purpose of easier understanding of the parking brake operation mechanism 60

As shown in Figs. 8 and 11, the parking brake operation mechanism 60 includes an operating-side link 600, a first actuating-side link 610, a second actuating-side link 620, a pressing member 630, and a retaining member 640.

The operating-side link 600 is operatively connected to the parking brake operation member 50 so as to be shifted along the axis line as the parking brake operation member 50 is manually operated.

In the present embodiment, as described earlier, the parking brake operation member 50 is supported in a rotatable manner about the parking brake operation shaft 55 that is aligned in the vehicle width direction, and is rotatable between the brake release position and the brake actuating position about the parking brake operation reference axis that is configured by the parking brake operation shaft 55.

As shown in Figs. 6, 7, 11, and the like, the parking brake operation mechanism 60 is provided with a parking brake operating-side intermediate shaft 650 that is supported so as to be along the vehicle width direction with an inner end thereof protruding from the inner side surface of the first fender into the space.

The parking brake operating-side intermediate shaft 650 is operatively connected to the parking brake operation member 50 so as to rotate about the axis line into the brake actuating direction as the parking brake operation member 50 is shifted about the reference axis from the brake release position to the brake actuating position.

In the present embodiment, as shown in Figs. 8 and 11, the parking brake operation mechanism 60 includes a parking brake operating-side first link 651 and a parking brake operating-side second link 652. The parking brake operating-side first link 651 has a first end connected to the parking brake operation member 50 in a relatively rotatable manner about a connecting shaft aligned in the vehicle width direction. The parking brake operating-side second link 652 has a first end connected to a second end of the first link 651 in a relatively rotatable manner about a pivot axis extending in the vehicle width direction, and a second end connected to the parking brake operating-side intermediate shaft 650 in a relatively non-rotatable manner about the axis line thereof. The parking brake operating-side intermediate shaft 650 is operatively connected to the parking brake operation member 50 via the first and second links 651 and 652.

As shown in Figs. 11 and the like, the operating-side link 600 is operatively connected to the parking brake operating-side intermediate shaft 650 so as to be shifted along the axis line in the vehicle longitudinal direction in accordance with the axial rotation of the parking brake operating-side intermediate shaft 650.

In the present embodiment, there is provided a connecting arm 653 that is connected to the inner end of the parking brake operating-side intermediate shaft 650 in the vehicle width direction in a relatively non-rotatable manner about the axis line thereof, and the rear end of the operating-side link 600 is connected to a free end of the connecting arm 653 in a rotatable manner.

As shown in Figs. 4 and 8, the first actuating-side link 610 is operatively connected to the first brake operation mechanism 41 that is used for operating the first brake unit 11 located on the first side in the vehicle width direction.
In other words, the first brake unit 11 can be actuated via the first brake operation mechanism 41 in accordance with the shift of the first actuating-side link 610.

As shown in Fig. 9, the second actuating-side link 620 is operatively connected to the second brake operation mechanism 42 that is used for operating the second brake unit 12 located on the second side in the vehicle width direction, which is opposite to the first side.
In other words, the second brake unit 12 can be actuated via the second brake operation mechanism 42 in accordance with the shift of the second actuating-side link 620.

In the present embodiment, as shown in Figs. 11 and the like, the parking brake operation mechanism 60 further includes a parking brake rotary shaft 660, a first brake connecting member 670, and a second brake connecting member 680. The parking brake rotary shaft 660 is aligned in the vehicle width direction and is supported so as to be rotatable about its axis line. The first brake connecting member 670 has an upper end operatively connected to the first actuating-side link 610 and a lower end operatively connected to the first brake actuation arm 412. The second brake connecting member 680 has an upper end operatively connected to the second actuating-side link 620 and a lower end operatively connected to the second brake actuation arm 422.

In the present embodiment, the first actuating-side link 610 is supported at the proximal end thereof by the parking brake rotary shaft 660 in a relatively rotatable manner with respect thereto. The upper end of the first brake connecting member 670 is operatively connected to the first actuating-side link 610 in a state of being externally mounted to the parking brake rotary shaft 660 in a relatively rotatable manner with respect thereto.
The above configuration stabilizes the swinging motions of the first actuating-side link 610 and the first brake connecting member 670.

The second actuating-side link 620 is supported at the proximal end thereof by the parking brake rotary shaft 660 in a relatively non-rotatable manner with respect thereto. The second brake connecting member 680 has an upper end supported by the parking brake rotary shaft 660 in a relatively non-rotatable manner with respect thereto and a lower end operatively connected to the second brake actuation arm 422.

Accordingly, the motion of the second actuating-side link 620 located on the first side in the vehicle width direction is transmitted to the second side in the vehicle width direction via the parking brake rotary shaft 660 aligned in the vehicle width direction, and is further transmitted to the second brake actuation arm 422 via the second brake connecting member 680.

The configuration makes it possible to stably support the second actuating-side link 620 while easily transmitting the motion of the second actuating-side link 620 that is located on the first side in the vehicle width direction to the second brake actuation arm 422 that is located on the second side in the vehicle width direction.

In the present embodiment, as shown in Fig. 7, the parking brake rotary shaft 660 is disposed between the driver's seat 20 and the transmission 10 with respect to the vertical direction.
The configuration makes it possible to realize the utilization of a dead space by installing the parking brake rotary shaft 660 therein.

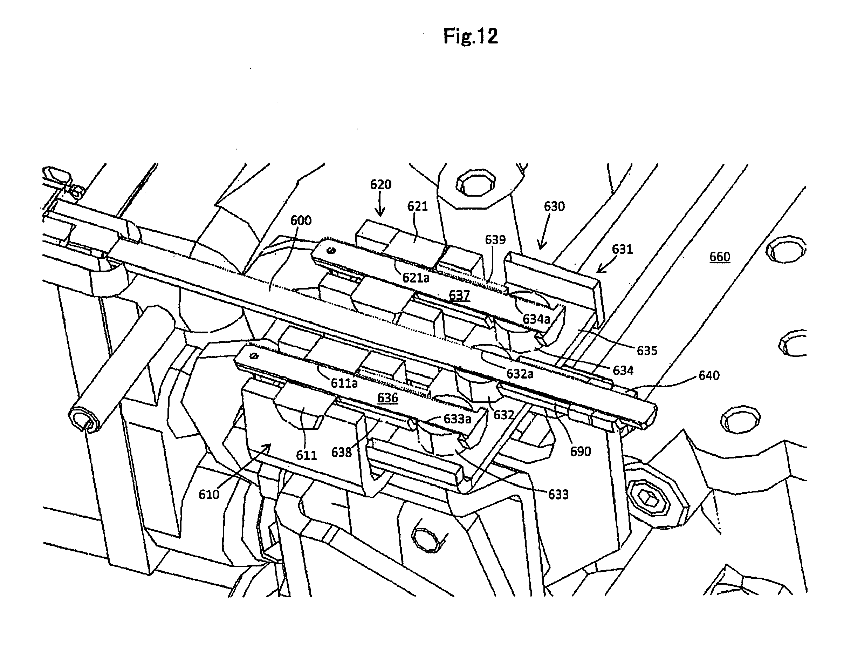

Fig. 12 is a sectional view taken along line XII-XII indicated in Figs. 8 and 11.
As shown in Fig. 12, the pressing member 630 is supported by the operating-side link 600 in a relatively movable manner along the axis line so as to face the upper ends of the first and second actuating-side links 610 and 620. The retaining member 640 is supported by the operating-side link 600 in a relatively immovable manner along the axis line and in a positioning-adjustable manner along the axis line so that the pressing member 630 is interposed between the retaining member 640 and the upper ends of the first and second actuating-side links 610 and 620.

Accordingly, when the operating-side link 600 is shifted into the brake actuating direction toward the first side in the axial direction in accordance with a manual operation to the parking brake operation member 50 from the brake release position to the brake actuating position, the retaining member 640, which is shifted together with the operating-side link 600, operatively presses into the brake actuating directions both the first and second actuating-side links 610 and 620 via the pressing member 630.
The movements of the first and second actuating-side links 610 and 620 into the brake actuating directions causes the first and second brake units 11 and 12 to be brought into the brake actuating states, respectively.

When at least one of the first and second brake operation members 31 and 32 is operated in a state where the parking brake operation member 50 is not operated, the corresponding one(s) of the first and second actuating-side links 610 and 620 is shifted into the brake actuating direction(s) via the corresponding one(s) of the first and second brake operation mechanisms 41 and 42.

The first and second actuating-side links 610 and 620 are provided separately from the pressing member 630, and can be shifted into the brake actuating directions without affecting the pressing member 630.
Therefore, effectively prevented is the shift of the parking brake operation member 50 due to the motion(s) of the first and/or second brake operation member(s) 31 and 32 based on the manual operation thereto.

As shown in Figs. 6 and 7, in the working vehicle 1 according to the present embodiment, the operating-side link 600, which supports the pressing member 630 and the retaining member 640, is aligned in the vehicle longitudinal direction in the space between the driver's seat 20 and the first fender 121.

This configuration allows easy access to the retaining member 640 without detaching the components of the working vehicle 1 such as the driver's seat 20 and the step board 100. As a result, it is possible to significantly easily adjust the relationship between the operation position of the parking brake operation member 50 and the actuation states of the first and second brake units 11 and 12.

Detailed next is the adjustment mentioned above.
Changing a fixed position of the retaining member 640 with respect to a position in an axis line direction of the operating-side link 600 can realize the adjustment of a "play amount" of the parking brake operation member 50.

More specifically, in a case where the fixed position of the retaining member 640 with respect to the operating-side link 600 is set such that the retaining member 640 is distant by a length L from the pressing member 630 at the time when the parking brake operation member 50 is located at the brake release position, the retaining member 640 starts to be engaged with the pressing member 630 so that the first and second brake units 11 and 12 start to generate braking forces after the parking brake operation member 50 is shifted by a predetermined amount X from the brake release position toward the brake actuating position. In this case, the predetermined amount X corresponds to the "play amount" of the parking brake operation member 50.

In another case where the fixed position of the retaining member 640 with respect to the operating-side link 600 is set such that the retaining member 640 is engaged with the pressing member 630 at the time when the parking brake operation member 50 is located at the brake release position, the first and second brake units 11 and 12 start to generate braking forces as the parking brake operation member 50 starts to be shifted from the brake release position toward the brake actuating position. In this case, the "play amount" of the parking brake operation member 50 is substantially equal to zero.

As described above, changing the fixed position of the retaining member 640 with respect to the axis line direction of the operating-side link 600 can realize the adjustment of the relationship between the operation position of the parking brake operation member 50 and the actuation states of the first and second brake units 11 and 12. In the working vehicle 1 according to the present embodiment, the operating-side link 600, which supports the pressing member 630 and the retaining member 640, is aligned in the vehicle longitudinal direction in the space between the driver's seat 20 and the first fender 121, as described above.
Therefore, the above adjustment work can be extremely easily performed without detaching the components of the working vehicle 1.

In the present embodiment, as shown in Fig. 12, the pressing member 630 has a main body portion 631 that is provided with a central through hole 632a through which the operating-side link 600 is inserted so as to be axially movable.
The parking brake operation mechanism 60 is further provided with an operating-side spacer 690 that is supported by the operating-side link 600 in a relatively movable manner along the axis line thereof with respect thereto so as to be located between the main body portion 631 of the pressing member 630 and the retaining member 640.

In this configuration, when the retaining member 640 is shifted into the brake actuating direction along the axis line of the operating-side link 600 together with the operating-side link 600, the retaining member 640 presses the first and second actuating-side links 610 and 620 into the brake actuating directions about the axis line of the parking brake rotary shaft 660 via the operating-side spacer 690 and the pressing member 630.

As described above, in the configuration in which the operating-side spacer 690 is interposed between the retaining member 640 and the main body portion 631 of the pressing member 630, it is possible to adjust the relationship between the operation position of the parking brake operation member 50 and the actuation states of the first and second brake units 11 and 12 also by replacing the operating-side spacer 690 with another operating-side spacer 690' of a different length.

The working vehicle 1 according to the present embodiment is also configured as described below in order to stabilize the motions of the first and second actuating-side links 610 and 620.

As shown in Fig. 12, the main body portion 631 of the pressing member 630 is provided, in addition to the central through hole 632a, with a first through hole 633a and a second through hole 634a. The first through hole 633a is opened in the vehicle longitudinal direction on the first side of the central through hole 632a in the vehicle width direction so as to face the upper end of the first actuating-side link 610. The second through hole 634a is provided on the second side of the central through hole 632a in the vehicle width direction so as to face the upper end of the second actuating-side link 620.

More specifically, the main body portion 631 has a central engagement portion 632 provided with the central through hole 632a, a first engagement portion 633 provided with the first through hole 633a, a second engagement portion 634 provided with the second through hole 634a, and a case 635 that integrally connects the central engagement portion 632, the first engagement portion 633, and the second engagement portion 634.

Further, as shown in Fig. 12, provided at the upper ends of the first and second actuating-side links 610 and 620 are engagement portions 611 and 621 that are provided with through holes 611a and 621a so as to face the first and second through holes 633a and 634a, respectively.

As shown in Fig. 12, the pressing member 630 further includes a first connecting shaft 636, a second connecting shaft 637, a first spacer 638, and a second spacer 639. The first connecting shaft 636 has a first end inserted through the first through hole 633a in a relatively movable manner along an axis line with respect thereto and a second end inserted through the through hole 611a in the first actuating-side link 610 in a relatively movable manner along an axis line with respect thereto. The first connecting shaft 636 connects the main body portion 635 and the first actuating-side link 610 in a state where they are relatively movable to each other only within a predetermined distance. The second connecting shaft 637 has a first end inserted through the second through hole 634a in a relatively movable manner along an axis line with respect thereto and a second end inserted through the through hole 621a in the second actuating-side link 620 in a relatively movable manner along an axis line with respect thereto. The second connecting shaft 637 connects the main body portion 635 and the second actuating-side link 620 in a state where they are relatively movable to each other only within a predetermined distance. The first spacer 638 is externally mounted to the first connecting shaft 636 so as to be located between the main body portion 635 and the engagement portion 611 of the first actuating-side link 610 as well as to be relatively movable along the axis line with respect thereto. The second spacer 639 is externally mounted to the second connecting shaft 637 so as to be located between the main body portion 635 and the engagement portion 621 of the second actuating-side link 620 as well as to be relatively movable along the axis line with respect thereto.

In the configuration described above, when the operating-side link 600 is axially moved into the brake actuating direction in accordance with the braking operation of the parking brake operation member 50, the retaining member 640, which is shifted together with the operating-side link 600, presses the first and second actuating-side links 610 and 620 into the brake actuating directions about the parking brake rotary shaft via the operating-side spacer 690, the main body portion 631 of the pressing member 630, and the first and second spacers 638 and 639. On the other hand, when the first or second brake operation member 31 or 32 is operated, corresponding one of the first and second actuating-side links 610 and 620 is shifted into the brake actuating direction about the parking brake rotary shaft 660 relatively to the main body portion 631 while being continuously connected with the main body portion 631 via corresponding one of the first and second connecting shafts 636 and 637.
Therefore achieved are the stable motions of the first and second actuating-side links 610 and 620.

The working vehicle 1 according to the present embodiment is also configured so as to prevent the first and second brake operation members 31 and 32 from being moved at the time when the first and second brake units 11 and 12 are actuated in accordance with a manual operation to the parking brake operation member 50 while causing the first brake unit 11 or the second brake unit 12 to be brought into the brake actuating state via corresponding one of the first and second brake operation mechanisms 41 and 42 in accordance with a manual operation to corresponding one of the first and second brake operation members 31 and 32.

As shown in Fig. 10, the first and second brake connecting shafts 413 and 423 are provided at the front ends with elongated holes 413a and 423a along the respective axis lines.
More specifically, the elongated holes 413a and 423a extend between first ends (front ends in the figure), which are positioned on sides close to the brake actuating directions of the corresponding brake connecting shafts 413 and 423, and second ends (rear ends in the figure), which are positioned on sides close to the brake release directions thereof, respectively.

The first brake operation arm 414 has a free end provided with an engagement pin 414a, which is engaged with the first end of the elongated hole 413a when the first brake operation member 31 is located at the brake release position.

Similarly, the second brake operation arm 424 has a free end provided with an engagement pin 424a, which is engaged with the first end of the elongated hole 423a when the second brake operation member 32 is located at the brake release position.

In the configuration described above, the first brake connecting shaft 413 or the second brake connecting shaft 423 can be axially shifted into the brake actuating direction in accordance with the braking operation of corresponding one of the first and second brake operation members 31 and 32, and the engagement pins 414a and 424a are relatively shifted in the elongated holes 413a and 423a when the first and second brake connecting shafts 413 and 423 are axially shifted into the brake actuating directions in accordance with the braking operation of the parking brake operation member 50.
Therefore, it is possible to surely prevent the first and second brake operation members 31 and 32 from being shifted at the time when the parking brake operation member 50 is operated.

Described next is a structure for mounting a rearview mirror 90 that is provided in the working vehicle 1.
As shown in Fig. 2, the working vehicle 1 includes the rearview mirror 90 that is mounted on one side in the vehicle width direction (on the left side in the forward travel direction in the figure).

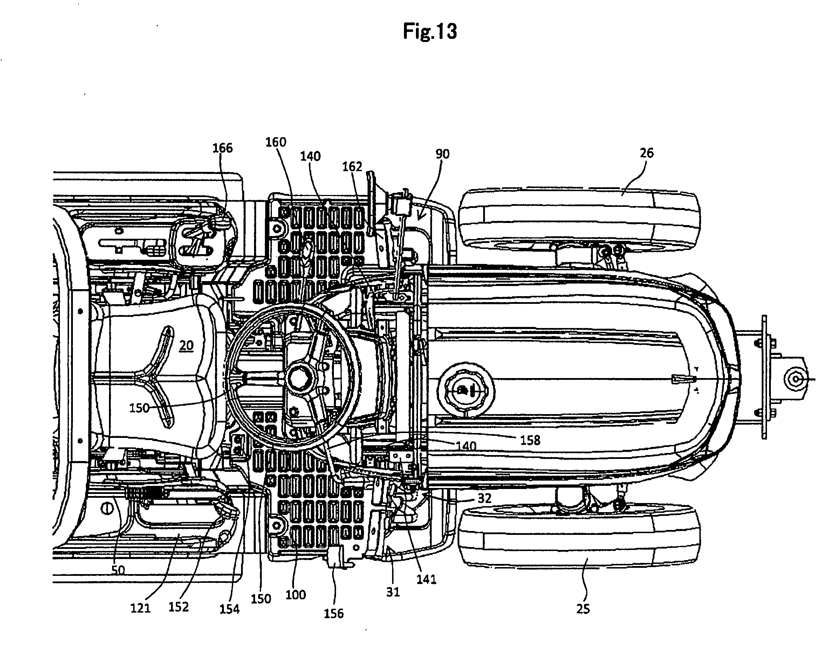

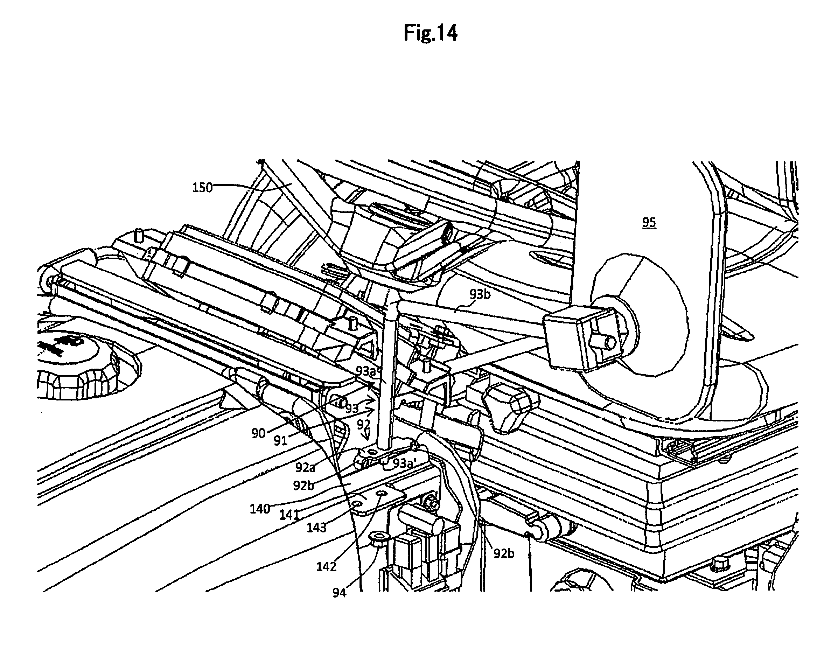

Figs. 13 and 14 are an enlarged plan view and an exploded perspective view each showing a state where a top cover 111 is detached from the dashboard 110.

As shown in Figs. 13 and 14, there is provided a frame 140 within the dashboard 110, and the frame 140 is provided on both of right and left sides with attachment stays 141 extending substantially in the horizontal direction.

As shown in Fig. 14, the rearview mirror 90 has a support rod 91 and a mirror main body 95. The support rod 91 has a bracket 92 mounted on the attachment stay 141 and a shaft portion 93 fixed to the bracket 92. The mirror main body 95 is attached to the upper end of the support rod 91.

The shaft portion 93 has a vertically extending portion 93a that extends substantially in the vertical direction and is fixed with the bracket 92, and a horizontally extending portion 93b that extends horizontally from an upper end of the vertically extending portion 93a.
The vertically extending portion 93a has a lower portion 93a' extending downward from the bracket 92, and the lower portion 93a' is provided with a thread.

The attachment stay 141 is provided with an attachment hole 142 that vertically passes through the attachment stay 141, and the bracket 92 is mounted on the attachment stay 141 in a state where the lower portion 93a' is inserted into the attachment hole 142.
In this state, the support rod 91 is fixed to the attachment stay 141 by screwing a nut 94 onto the lower portion 93a'.

In the present embodiment, as shown in Fig. 14, the attachment stay 141 is further provided with an engagement hole 143.
Meanwhile, the bracket 92 has a plane portion 92a and a claw portion 92b. The plane portion 92a through which the vertically extending portion 93a passes is mounted on the attachment stay 141. The claw portion 92b extends downward from an edge of the plane portion 92a and is engaged into the engagement hole 143.
The configuration makes it possible to stably support the rearview mirror.

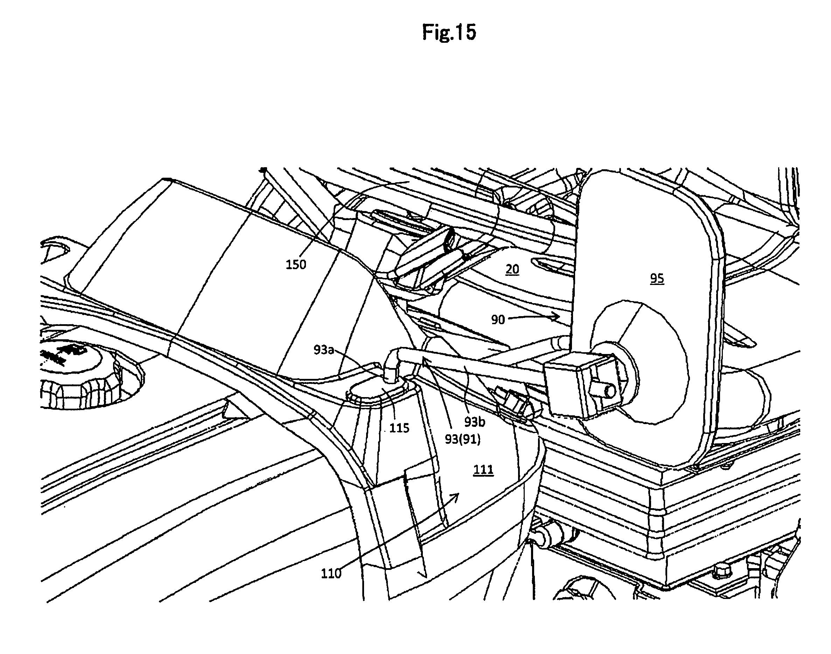

The top cover 111 of the dashboard 110 is provided with a through hole that allows the vertically extending portion 93a of the support rod 91 to pass therethrough, and this through hole is sealed by a grommet 115 as shown in Fig. 15.

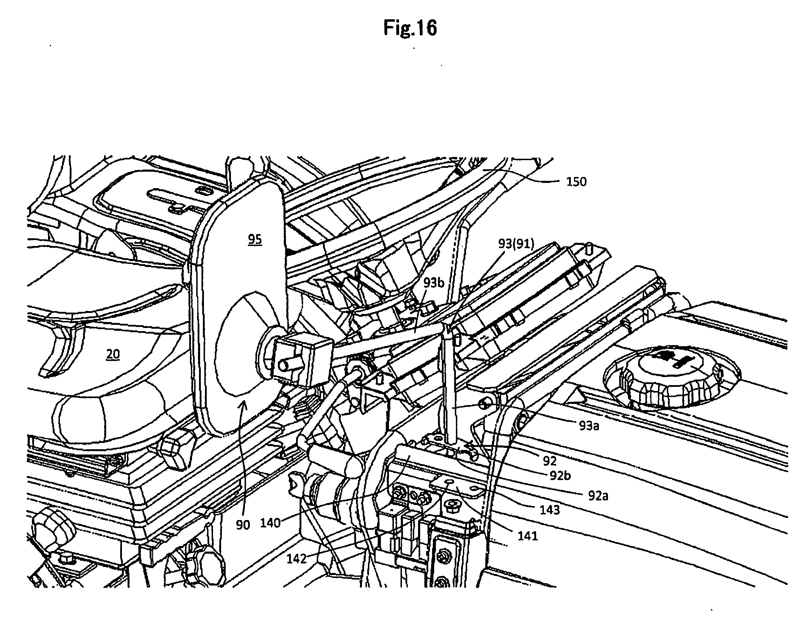

Alternatively, as shown in Fig. 16, the rearview mirror 90 can be attached to the attachment stay 141 on the right side by being rotated by 180 degrees about the vertically extending portion 93a of the support rod 91.

## Claims

1. A working vehicle comprising first and second brake operation members (31, 32) capable of being manually operated, first and second brake operation mechanism (41, 42) that operatively and respectively connects the first and second brake operation members to first and second brake units (11, 12) that are respectively positioned on first and second sides in a vehicle width direction, a parking brake operation member (50) capable of being manually operated, and a parking brake operation mechanism (60) that operatively connects the parking brake operation member to the first and second brake operation mechanisms, the working vehicle being **characterized in that**,
the parking brake operation member is disposed on the first side of a driver's seat (20) in the vehicle width direction,
the parking brake operation mechanism includes an operating-side link (600) that is operatively connected to the parking brake operation member so as to be moved along its axis line in accordance with a manual operation to the parking brake operation member, a first actuating-side link (610) that has a lower end operatively connected to the first brake operation mechanism, a second actuating-side link (620) that has a lower end operatively connected to the second brake operation mechanism, a pressing member (630) that is supported by the operating-side link in a relatively movable manner along the axis line with respect thereto so as to face upper ends of the first and second actuating-side links, and a retaining member (640) that is supported by the operating-side link so as to be relatively immovable along the axis line with respect thereto and have its fixed position adjustable along the axis line of the operating-side link in a state where the pressing member is interposed between the retaining member and the upper ends of the first and second actuating-side links, wherein, when the operating-side link is shifted into a brake actuating direction that is a first side in the axis line direction thereof in accordance with a brake operation to the parking brake operation member, the retaining member, which is shifted together with the operating-side link, operatively presses into the brake actuating directions both the first and second actuating-side links via the pressing member, and
the operating-side link, which supports the pressing member and the retaining member, is aligned in a vehicle longitudinal direction within a space between the driver's seat and a fender covering an upper end of a rear wheel (21) that is positioned on the first side in the vehicle width direction.

2. A working vehicle according to claim 1,
wherein the first brake operation mechanism includes a first brake actuation shaft (411) that is aligned in the vehicle width direction and switches the actuation states of the first brake unit between the brake actuating state and the brake release state in accordance with the axial rotation thereof, and a first brake actuation arm (412) that is supported by the first brake actuation shaft in a relatively non-rotatable manner with respect thereto,
wherein the second brake operation mechanism includes a second brake actuation shaft (421) that is aligned in the vehicle width direction and switches the actuation states of the second brake unit between the brake actuating state and the brake release state in accordance with the axial rotation thereof, and a second brake actuation arm (422) that is supported by the second brake actuation shaft in a relatively non-rotatable manner with respect thereto,
wherein the parking brake operation mechanism includes a parking brake rotary shaft (660) that is aligned in the vehicle width direction and is supported in a rotatable manner about its axis line, a first brake connecting member (670) that has a lower end operatively connected to the first brake actuation arm, and a second brake connecting member (680) that has a lower end operatively connected to the second brake actuation arm,
wherein an upper end of the first brake connecting member is operatively connected to the first actuating-side link that has a proximal end supported by the parking brake rotary shaft in a relatively rotatable manner with respect thereto,
wherein an upper end of the second brake connecting member is operatively connected to the parking brake rotary shaft by which a proximal end of the second actuating-side link is supported in a relatively non-rotatable manner with respect thereto, and
wherein the first and second actuating-side links are rotated into a brake actuating directions and a brake release directions around the axis line of the parking brake rotary shaft.

3. A working vehicle according to claim 2,
wherein the parking brake rotary shaft is disposed between the driver's seat and a transmission (10), which is provided with the first and second brake units, with respect to the vertical direction.

4. A working vehicle according to claim 2 or 3,
wherein the pressing member has a main body portion provided with a central through hole (632a) through which the operating-side link is inserted in a movable manner along the axis line, and
wherein the parking brake operation mechanism includes an operating-side spacer (690) that is supported by the operating-side link in a relatively movable manner along the axis line thereof with respect thereto so as to be located between the main body portion of the pressing member and the retaining member, wherein, when the operating-side link is moved into the brake actuating direction in the axis line, the retaining member presses the first and second actuating-side links into the brake actuating directions about the axis line of the parking brake rotary shaft via the operating-side spacer and the pressing member.

5. A working vehicle according to claim 4,
wherein the main body portion of the pressing member is provided, in addition to the central through hole, with a first through hole (633a), that is opened in the vehicle longitudinal direction on the first side of the central through hole (632a) in the vehicle width direction so as to face the upper end of the first actuating-side link, and a second through hole (634a) that is provided on the second side of the central through hole in the vehicle width direction so as to face the upper end of the second actuating-side link,
wherein the first and second actuating-side links are provided at the upper ends with engagement portions (611, 621) that are provided with through holes (611a, 621a) so as to face the first and second through holes, respectively,
wherein the pressing member further includes a first connecting shaft (636), a second connecting shaft (637), a first spacer (638) and a second spacer (639), the first connecting shaft having a first end inserted through the first through hole in a relatively movable manner along an axis line with respect thereto and a second end inserted through the through hole in the first actuating-side link in a relatively movable manner along an axis line with respect thereto, and connecting the main body portion and the first actuating-side link in a state where they are relatively movable to each other only within a predetermined distance, the second connecting shaft having a first end inserted through the second through hole in a relatively movable manner along an axis line with respect thereto and a second end inserted through the through hole in the second actuating-side link in a relatively movable manner along an axis line with respect thereto, and connecting the main body portion and the second actuating-side link in a state where they are relatively movable to each other only within a predetermined distance, the first spacer being externally mounted to the first connecting shaft so as to be located between the main body portion and the engagement portion of the first actuating-side link as well as to be relatively movable along the axis line with respect thereto, the second spacer being externally mounted to the second connecting shaft so as to be located between the main body portion and the engagement portion of the second actuating-side link as well as to be relatively movable along the axis line with respect thereto, and
wherein, when the operating-side link is axially moved into the brake actuating direction in the axis line direction in accordance with the braking operation of the parking brake operation member, the retaining member, which is shifted together with the operating-side link, presses the first and second actuating-side links into the brake actuating directions about the parking brake rotary shaft via the operating-side spacer, the main body portion of the pressing member and the first and second spacers, while, when the first or second brake operation member is operated, corresponding one of the first and second actuating-side links is shifted into the brake actuating direction about the parking brake rotary shaft relatively to the main body portion with being continuously connected with the main body portion via corresponding one of the first and second connecting shafts.

6. A working vehicle according to any one of claims 2 to 5,
wherein the first brake operation member includes a first support rod (310) and a first pedal main body (311), the first support rod having a proximal end supported by a brake operation shaft (425), which is disposed below a step board (100) and is aligned in the vehicle width direction, in a relatively rotatable manner with respect thereto and a distal end extending upward so as to be above the step board on the first side in the vehicle width direction, the first pedal main body being supported by the distal end of the first support rod,
wherein the second brake operation member includes a second support rod (320) and a second pedal main body (321), the second support rod having a proximal end supported by the brake operation shaft in a relatively non-rotatable manner with respect thereto and a distal end extending upward so as to be above the step board and be aligned with the distal end of the first support rod in the vehicle width direction, the second pedal main body being supported by the distal end of the second support rod,
wherein the first brake operation mechanism includes a first brake operation arm (414) and a first brake connecting shaft (413), the first brake operation arm being non-rotatable relatively to the first brake operation member about the axis line of the brake operation shaft, the first brake connecting shaft having a front end connected to the first brake operation arm and a rear end connected to the first brake actuation arm,
wherein the second brake operation mechanism includes the brake operation shaft, a second brake operation arm (424) and a second brake connecting shaft (423), the second brake operation arm being disposed on the second side of the brake operation shaft in the vehicle width direction in a state of being relatively non-rotatable with respect to the brake operation shaft about the axis thereof, the second brake connecting shaft having a front end connected to the second brake operation arm and a rear end connected to the second brake actuation arm,
wherein the first brake connecting shaft is formed at the front end with an elongated hole (413a), the first brake operation arm is provided with an engagement pin (414a) that is engaged into the elongated hole, and the first brake operation arm and the first brake connecting shaft are connected to each other via the elongated hole and the engagement pin so that the first brake operation arm is prevented from being moved at the time when the first brake connecting shaft is moved into the brake actuating direction along the axis line direction in accordance with the brake operation to the parking brake operation member while the first brake connecting shaft is moved into the brake actuating direction along the axis line direction in accordance with the brake operation to the first brake operation member, and
wherein the second brake connecting shaft is formed at the front end with an elongated hole (423a), the second brake operation arm is provided with an engagement pin (424a) that is engaged into the elongated hole, and the second brake operation arm and the second brake connecting shaft are connected to each other via the elongated hole and the engagement pin so that the second brake operation arm is prevented from being moved at the time when the second brake connecting shaft is moved into the brake actuating direction along the axis line direction in accordance with the brake operation to the parking brake operation member while the second brake connecting shaft is moved into the brake actuating direction along the axis line direction in accordance with the brake operation to the second brake operation member.

7. A working vehicle according to any one of claims 1 to 4,
wherein the parking brake operation member is supported so as to be rotatable about a parking brake operation reference axis extending in the vehicle width direction in a state where at least a distal end serving as a grip portion is exposed outward from the fender,
wherein the parking brake operation mechanism includes a parking brake operating-side intermediate shaft (650) that is supported so as to be along the vehicle width direction with an inner end thereof protruding from an inner side surface of the fender into the space, the parking brake operating-side intermediate shaft being rotated about the axis line into the brake actuating direction as the parking brake operation member is shifted about the reference axis from the brake release position to the brake actuating position, and
wherein the operating-side link is operatively connected to the parking brake operating-side intermediate shaft so as to be shifted along the axis line into the brake actuating direction in accordance with a rotation of the parking brake operating-side intermediate shaft around the axis line into the brake actuating direction.

## Patentansprüche

1. Arbeitsfahrzeug, das Folgendes umfasst: ein erstes und ein zweites Element zum Bedienen der Bremse (31, 32), die manuell bedient werden können; einen ersten und einen zweiten Mechanismus zum Bedienen der Bremse (41, 42), die das erste und das zweite Element zum Bedienen der Bremse mit einer ersten bzw. einer zweiten Bremseinheit (11, 12) wirkverbinden, die auf einer ersten bzw. einer zweiten Seite in einer Richtung der Fahrzeugbreite angeordnet sind; ein Element zum Bedienen der Feststellbremse (50), das manuell bedient werden kann; und einen Mechanismus zum Bedienen der Feststellbremse (60), der das Element zum Bedienen der Feststellbremse mit dem ersten und dem zweiten Mechanismus zum Bedienen der Bremse wirkverbindet; wobei das Arbeitsfahrzeug **dadurch gekennzeichnet ist, dass**:
das Element zum Bedienen der Feststellbremse auf der ersten Seite eines Fahrersitzes (20) in der Richtung der Fahrzeugbreite angeordnet ist,
der Mechanismus zum Bedienen der Feststellbremse Folgendes umfasst: ein bedienungsseitiges Verbindungsglied (600), das mit dem Element zum Bedienen der Feststellbremse in einer solchen Weise wirkverbunden ist, dass es entlang seiner Achsenlinie gemäß einer manuellen Bedienung des Elements zum Bedienen der Feststellbremse bewegt wird; ein erstes betätigungsseitiges Verbindungsglied (610), das an seinem unteren Ende mit dem ersten Mechanismus zum Bedienen der Bremse wirkverbunden ist; ein zweites betätigungsseitiges Verbindungsglied (620), das an seinem unteren Ende mit dem zweiten Mechanismus zum Bedienen der Bremse wirkverbunden ist; ein Drückelement (630), das durch das bedienungsseitige Verbindungsglied in einer relativ dazu beweglichen Weise entlang der Achsenlinie derart gestützt wird, dass es oberen Enden des ersten und des zweiten betätigungsseitigen Verbindungsgliedes zugewandt ist; und ein Halteelement (640), das durch das bedienungsseitige Verbindungsglied derart gestützt wird, dass es entlang der Achsenlinie relativ dazu unbeweglich ist und dass seine feste Position entlang der Achsenlinie des bedienungsseitigen Verbindungsgliedes in einem Zustand verstellbar ist, in dem das Drückelement zwischen dem Halteelement und den oberen Enden des ersten und des zweiten betätigungsseitigen Verbindungsgliedes angeordnet ist; wobei, wenn das bedienungsseitige Verbindungsglied gemäß einer Bremsbedienung des Elements zum Bedienen der Feststellbremse in einer Richtung der Bremsbetätigung, das heißt zu einer ersten Seite in seiner Richtung der Achsenlinie, verschoben wird, das Halteelement, das zusammen mit dem bedienungsseitigen Verbindungsglied verschoben wird, sowohl das erste als auch das zweite betätigungsseitige Verbindungsglied über das Drückelement operativ in die Richtungen der Bremsbetätigung drückt, und das bedienungsseitige Verbindungsglied, welches das Drückelement und das Halteelement stützt, in einer Richtung der Fahrzeuglänge innerhalb eines Raumes zwischen dem Fahrersitz und einem Schutzblech, das ein oberes Ende eines Hinterrades (21) bedeckt, das auf der ersten Seite in der Richtung der Fahrzeugbreite positioniert ist, ausgerichtet ist.

2. Arbeitsfahrzeug nach Anspruch 1,
wobei der erste Mechanismus zum Bedienen der Bremse eine erste Welle zum Betätigen der Bremse (411) umfasst, die in der Richtung der Fahrzeugbreite ausgerichtet ist und die Betätigungszustände der ersten Bremseinheit gemäß ihrer axialen Rotation zwischen dem Zustand der Bremsbetätigung und dem Zustand der Bremsenlösung umschaltet, und einen ersten Bremsbetätigungsarm (412) umfasst, der durch die erste Welle zum Betätigen der Bremse in einer relativ dazu nicht-drehbaren Weise gestützt wird,
wobei der zweite Mechanismus zum Bedienen der Bremse eine zweite Welle zum Betätigen der Bremse (421) umfasst, die in der Richtung der Fahrzeugbreite ausgerichtet ist und die Zustände der Betätigung der zweiten Bremseinheit gemäß ihrer axialen Rotation zwischen dem Zustand der Bremsbetätigung und dem Zustand der Bremsenlösung umschaltet, und einen zweiten Bremsbetätigungsarm (422) umfasst, der durch die zweite Welle zum Betätigen der Bremse in einer relativ dazu nicht-drehbaren Weise gestützt wird,
wobei der Mechanismus zum Bedienen der Feststellbremse Folgendes umfasst: eine Feststellbrems-Drehwelle (660), die in der Richtung der Fahrzeugbreite ausgerichtet ist und in einer drehbaren Weise um ihre Achsenlinie gestützt wird; ein erstes Bremsverbindungselement (670), das an seinem unteren Ende mit dem ersten Bremsbetätigungsarm wirkverbunden ist; und ein zweites Bremsverbindungselement (680), das an seinem unteren Ende mit dem zweiten Bremsbetätigungsarm wirkverbunden ist,
wobei ein oberes Ende des ersten Bremsverbindungselements mit dem ersten betätigungsseitigen Verbindungsglied wirkverbunden ist, dessen proximales Ende durch die Feststellbrems-Drehwelle in einer relativ dazu drehbaren Weise gestützt wird,
wobei ein oberes Ende des zweiten Bremsverbindungselements mit der Feststellbrems-Drehwelle wirkverbunden ist, durch die ein proximales Ende des zweiten betätigungsseitigen Verbindungsgliedes in einer relativ dazu nicht-drehbaren Weise gestützt wird, und
wobei das erste und das zweite betätigungsseitige Verbindungsglied in einer Richtung der Bremsbetätigung und einer Richtung der Bremsenlösung um die Achsenlinie der Feststellbrems-Drehwelle gedreht werden.

3. Arbeitsfahrzeug nach Anspruch 2,
wobei die Feststellbrems-Drehwelle zwischen dem Fahrersitz und einer Kraftübertragung (10), die mit der ersten und der zweiten Bremseinheit versehen ist, relativ zur vertikalen Richtung angeordnet ist.

4. Arbeitsfahrzeug nach Anspruch 2 oder 3,
wobei das Drückelement einen Hauptkorpusabschnitt hat, der mit einem zentralen Durchgangsloch (632a) versehen ist, durch welches das bedienungsseitige Verbindungsglied in einer bewegliche Weise entlang der Achsenlinie eingeführt ist, und
wobei der Mechanismus zum Bedienen der Feststellbremse einen bedienungsseitigen Abstandshalter (690) umfasst, der durch das bedienungsseitige Verbindungsglied in einer relativ dazu beweglichen Weise entlang seiner Achsenlinie derart gestützt wird, dass er sich zwischen dem Hauptkorpusabschnitt des Drückelements und dem Halteelement befindet, wobei, wenn das bedienungsseitige Verbindungsglied in der Richtung der Bremsbetätigung in der Achsenlinie bewegt wird, das Halteelement das erste und das zweite betätigungsseitige Verbindungsglied über den bedienungsseitigen Abstandshalter und das Drückelement in die Richtung der Bremsbetätigung um die Achsenlinie der Feststellbrems-Drehwelle drückt.

5. Arbeitsfahrzeug nach Anspruch 4,
wobei der Hauptkorpusabschnitt des Drückelements, zusätzlich zu dem zentralen Durchgangsloch, mit einem ersten Durchgangsloch (633a) versehen ist, das in der Richtung der Fahrzeuglänge auf der ersten Seite des zentralen Durchgangslochs (632a) in der Richtung der Fahrzeugbreite derart geöffnet ist, dass es dem oberen Ende des ersten betätigungsseitigen Verbindungsgliedes zugewandt ist, und mit einem zweiten Durchgangsloch (634a) versehen ist, das auf der zweiten Seite des zentralen Durchgangslochs in der Richtung der Fahrzeugbreite dergestalt angeordnet ist, dass es dem oberen Ende des zweiten betätigungsseitigen Verbindungsgliedes zugewandt ist,
wobei das erste und das zweite betätigungsseitige Verbindungsglied an den oberen Enden mit Eingriffnahmeabschnitten (611, 621) versehen sind, die derart mit Durchgangslöchern (611a, 621a) versehen sind, dass sie dem ersten bzw. dem zweiten Durchgangsloch zugewandt sind,
wobei das Drückelement des Weiteren eine erste Verbindungswelle (636), eine zweite Verbindungswelle (637), einen ersten Abstandshalter (638) und einen zweiten Abstandshalter (639) umfasst, wobei ein erstes Ende der ersten Verbindungswelle durch das erste Durchgangsloch in einer relativ dazu beweglichen Weise entlang einer Achsenlinie geführt ist und das zweite Ende der ersten Verbindungswelle durch das Durchgangsloch in dem ersten betätigungsseitigen Verbindungsglied in einer relativ dazu beweglichen Weise entlang einer Achsenlinie geführt ist, und wobei die erste Verbindungswelle den Hauptkorpusabschnitt und das erste betätigungsseitige Verbindungsglied in einem Zustand verbindet, in dem sie nur innerhalb eines zuvor festgelegten Abstands relativ zueinander beweglich sind; wobei ein erstes Ende der zweiten Verbindungswelle durch das zweite Durchgangsloch in einer relativ dazu beweglichen Weise entlang einer Achsenlinie geführt ist und das zweite Ende der zweiten Verbindungswelle durch das Durchgangsloch in dem zweiten betätigungsseitigen Verbindungsglied in einer relativ dazu beweglichen Weise entlang einer Achsenlinie geführt ist, und wobei die zweite Verbindungswelle den Hauptkorpusabschnitt und das zweite betätigungsseitige Verbindungsglied in einem Zustand verbindet, in dem sie nur innerhalb eines zuvor festgelegten Abstands relativ zueinander beweglich sind; wobei der erste Abstandshalter außen derart an der ersten Verbindungswelle montiert ist, dass er sich zwischen dem Hauptkorpusabschnitt und dem Eingriffnahmeabschnitt des ersten betätigungsseitigen Verbindungsgliedes befindet sowie relativ dazu entlang der Achsenlinie beweglich ist; wobei der zweite Abstandshalter außen derart an der zweiten Verbindungswelle montiert ist, dass er sich zwischen dem Hauptkorpusabschnitt und dem Eingriffnahmeabschnitt des zweiten betätigungsseitigen Verbindungsglied befindet sowie relativ dazu entlang der Achsenlinie beweglich ist; und
wobei, wenn das bedienungsseitige Verbindungsglied gemäß der Bremsbedienung des Elements zum Bedienen der Feststellbremse axial in der Richtung der Bremsbetätigung in der Richtung der Achsenlinie bewegt wird, das Halteelement, das zusammen mit dem bedienungsseitigen Verbindungsglied verschoben wird, das erste und das zweite betätigungsseitige Verbindungsglied in der Richtung der Bremsbetätigung über den bedienungsseitigen Abstandshalter, den Hauptkorpusabschnitt des Drückelements und den ersten und den zweiten Abstandshalter um die Feststellbrems-Drehwelle drückt, während, wenn das erste oder das zweite Element zum Bedienen der Bremse bedient wird, ein entsprechendes des ersten und des zweiten betätigungsseitigen Verbindungsgliedes in der Richtung der Bremsbetätigung um die Feststellbrems-Drehwelle relativ zu dem Hauptkorpusabschnitt verschoben wird, während es kontinuierlich mit dem Hauptkorpusabschnitt über eine entsprechende der ersten und der zweite Verbindungswelle verbunden ist.

6. Arbeitsfahrzeug nach einem der Ansprüche 2 bis 5, wobei das erste Element zum Bedienen der Bremse eine erste Stützstange (310) und einen ersten Pedalhauptkorpus (311) umfasst, wobei die erste Stützstange ein proximales Ende hat, das durch eine Bremsbedienwelle (425), die unter einem Trittbrett (100) angeordnet ist und in der Richtung der Fahrzeugbreite ausgerichtet ist, in einer relativ dazu drehbaren Weise gestützt wird, und ein distales Ende hat, das sich dergestalt aufwärts erstreckt, dass es sich oberhalb des Trittbrettes auf der ersten Seite in der Richtung der Fahrzeugbreite befindet, wobei der erste Pedalhauptkorpus durch das distale Ende der ersten Stützstange gestützt wird,
wobei das zweite Element zum Bedienen der Bremse eine zweite Stützstange (320) und einen zweiten Pedalhauptkorpus (321) umfasst, wobei die zweite Stützstange ein proximales Ende hat, das durch die Bremsbedienwelle in einer relativ dazu nicht-drehbaren Weise gestützt wird, und ein distales Ende hat, das sich dergestalt aufwärts erstreckt, dass es sich oberhalb des Trittbrettes befindet und dass es auf das distale Ende der ersten Stützstange in der Richtung der Fahrzeugbreite ausgerichtet ist, wobei der zweite Pedalhauptkorpus durch das distale Ende der zweiten Stützstange gestützt wird, wobei der erste Mechanismus zum Bedienen der Bremse einen ersten Bremsbedienarm (414) und eine erste Bremsverbindungswelle (413) umfasst, wobei der erste Bremsbedienarm relativ zu dem ersten Element zum Bedienen der Bremse um die Achsenlinie der Bremsbedienwelle nicht-drehbar ist, wobei die erste Bremsverbindungswelle ein vorderes Ende hat, das mit dem ersten Bremsbedienarm verbunden ist, und ein hinteres Ende hat, das mit dem ersten Bremsbetätigungsarm verbunden ist,
wobei der zweite Mechanismus zum Bedienen der Bremse die Bremsbedienwelle, einen zweiten Bremsbedienarm (424) und eine zweite Bremsverbindungswelle (423) umfasst, wobei der zweite Bremsbedienarm auf der zweiten Seite der Bremsbedienwelle in der Richtung der Fahrzeugbreite in einem Zustand angeordnet ist, in dem er relativ zu der Bremsbedienwelle um ihre Achse nicht-drehbar ist, wobei die zweite Bremsverbindungswelle ein vorderes Ende hat, das mit dem zweiten Bremsbedienarm verbunden ist, und ein hinteres Ende hat, das mit dem zweiten Bremsbetätigungsarm verbunden ist,
wobei die erste Bremsverbindungswelle am vorderen Ende mit einem Langloch (413a) ausgebildet ist, wobei der erste Bremsbedienarm mit einem Eingriffnahmestift (414a) versehen ist, der in dem Langloch in Eingriff genommen ist, und wobei der erste Bremsbedienarm und die erste Bremsverbindungswelle über das Langloch und den Eingriffnahmestift derart miteinander verbunden sind, dass sich der erste Bremsbedienarm in dem Moment nicht bewegen kann, wenn die erste Bremsverbindungswelle gemäß der Bremsbedienung des Elements zum Bedienen der Feststellbremse in der Richtung der Bremsbetätigung entlang der Richtung der Achsenlinie bewegt wird, während die erste Bremsverbindungswelle gemäß der Bremsbedienung des ersten Elements zum Bedienen der Bremse in der Richtung der Bremsbetätigung entlang der Richtung der Achsenlinie bewegt wird, und
wobei die zweite Bremsverbindungswelle am vorderen Ende mit einem Langloch (423a) ausgebildet ist, wobei der zweite Bremsbedienarm mit einem Eingriffnahmestift (424a) versehen ist, der in dem Langloch in Eingriff genommen ist, und wobei der zweite Bremsbedienarm und die zweite Bremsverbindungswelle über das Langloch und den Eingriffnahmestift derart miteinander verbunden sind, dass sich der zweite Bremsbedienarm in dem Moment nicht bewegen kann, wenn die zweite Bremsverbindungswelle gemäß der Bremsbedienung des Elements zum Bedienen der Feststellbremse in der Richtung der Bremsbetätigung entlang der Richtung der Achsenlinie bewegt wird, während die zweite Bremsverbindungswelle gemäß der Bremsbedienung des zweiten Elements zum Bedienen der Bremse in der Richtung der Bremsbetätigung entlang der Richtung der Achsenlinie bewegt wird.

7. Arbeitsfahrzeug nach einem der Ansprüche 1 bis 4,
wobei das Element zum Bedienen der Feststellbremse derart gestützt wird, dass es um eine Feststellbremsbedienungs-Bezugsachse, die sich in der Richtung der Fahrzeugbreite erstreckt, in einem Zustand drehbar ist, in dem mindestens ein distales Ende, das als ein Greifabschnitt dient, von dem Schutzblech nach außen frei liegt,
wobei der Mechanismus zum Bedienen der Feststellbremse eine feststellbremsbedienungsseitige Zwischenwelle (650) umfasst, die derart gestützt wird, dass sie sich entlang der Richtung der Fahrzeugbreite erstreckt, wobei ein inneres Ende der Zwischenwelle von einer Innenseitenfläche des Schutzblechs in den Raum hineinragt, wobei die feststellbremsbedienungsseitige Zwischenwelle um die Achsenlinie in der Richtung der Bremsbetätigung gedreht wird, wenn das Element zum Bedienen der Feststellbremse um die Bezugsachse aus der Position der Bremsenlösung in die Position der Bremsbetätigung verschoben wird, und
wobei das bedienungsseitige Verbindungsglied mit der feststellbremsbedienungsseitigen Zwischenwelle dergestalt wirkverbunden ist, dass es gemäß einer Rotation der feststellbremsbedienungsseitigen Zwischenwelle um die Achsenlinie in der Richtung der Bremsbetätigung entlang der Achsenlinie in der Richtung der Bremsbetätigung verschoben wird.

## Revendications

1. Véhicule de travail comprenant des premier et second éléments de commande de frein (31, 32) pouvant être commandés manuellement, des premier et un second mécanismes de commande de frein (41, 42) qui relient fonctionnellement et respectivement les premier et second éléments de commande de frein à de première et seconde unités de freins (11, 12) qui sont positionnées respectivement sur des premier et second côtés dans le sens de la largeur du véhicule, un élément de commande de frein de stationnement (50) pouvant être commandé manuellement, et un mécanisme de commande de frein de stationnement (60) qui relie fonctionnellement l'élément de commande de frein de stationnement aux premier et second mécanismes de commande de frein, le véhicule de travail étant **caractérisé en ce que**,
l'élément de commande de frein de stationnement est disposé sur le premier côté d'un siège de conducteur (20) dans le sens de la largeur du véhicule,
le mécanisme de commande de frein de stationnement comprend une bielle côté commande (600) qui est reliée fonctionnellement à l'élément de commande de frein de stationnement de manière à être déplacée le long de sa ligne axiale en fonction d'une opération manuelle sur l'élément de commande de frein de stationnement, une première bielle côté actionnement (610) qui a une extrémité inférieure reliée fonctionnellement au premier mécanisme de commande de frein, une seconde bielle côté actionnement (620) qui a une extrémité inférieure reliée fonctionnellement au second mécanisme de commande de frein, un élément de pression (630) qui est supporté par la bielle côté commande de manière relativement mobile le long de la ligne axiale par rapport à celle-ci de manière à faire face aux extrémités supérieures des première et seconde bielles côté actionnement, et un élément de retenue (640) qui est supporté par la bielle côté commande de manière à être relativement immobile le long de la ligne axiale par rapport à celle-ci et à avoir sa position fixe réglable le long de la ligne axiale de la bielle côté commande dans un état où l'élément de pression est intercalé entre l'élément de retenue et les extrémités supérieures des première et seconde bielles côté actionnement, dans lequel, lorsque la bielle côté commande est déplacée dans une direction d'actionnement de frein qui est un premier côté dans la direction de ligne axiale de celle-ci en fonction d'une opération de freinage sur l'élément de commande de frein de stationnement, l'élément de retenue, qui est déplacé en même temps que la bielle côté commande, presse de manière fonctionnelle dans les directions d'actionnement de frein à la fois la première et la seconde bielle côté actionnement par l'intermédiaire de l'élément de pression, et
la bielle côté commande, qui supporte l'élément de pression et l'élément de retenue, est alignée dans une direction longitudinale du véhicule dans un espace entre le siège du conducteur et une aile couvrant une extrémité supérieure d'une roue arrière (21) qui est positionnée sur le premier côté dans le sens de la largeur du véhicule.

2. Véhicule de travail selon la revendication 1,
dans lequel le premier mécanisme de commande de frein comprend un premier arbre d'actionnement de frein (411) qui est aligné dans le sens de la largeur du véhicule et change les états d'actionnement de la première unité de frein entre l'état d'actionnement de frein et l'état de desserrage de frein en fonction de la rotation axiale de celui-ci, et un premier bras d'actionnement de frein (412) qui est supporté par le premier arbre d'actionnement de frein d'une manière relativement non rotative par rapport à celui-ci,
dans lequel le second mécanisme de commande de frein comprend un second arbre d'actionnement de frein (421) qui est aligné dans le sens de la largeur du véhicule et change les états d'actionnement de la seconde unité de frein entre l'état d'actionnement de frein et l'état de desserrage de frein en fonction de la rotation axiale de celui-ci, et un second bras d'actionnement de frein (422) qui est supporté par le second arbre d'actionnement de frein d'une manière relativement non rotative par rapport à celui-ci,
dans lequel le mécanisme de commande du frein de stationnement comprend un arbre rotatif de frein de stationnement (660) qui est aligné dans le sens de la largeur du véhicule et est supporté de manière rotative autour de sa ligne axiale, un premier élément de liaison de frein (670) qui a une extrémité inférieure reliée fonctionnellement au premier bras d'actionnement de frein, et un second élément de liaison de frein (680) qui a une extrémité inférieure reliée fonctionnellement au second bras d'actionnement de frein,
dans lequel une extrémité supérieure du premier élément de liaison de frein est reliée fonctionnellement à la première bielle côté actionnement qui a une extrémité proximale supportée par l'arbre rotatif de frein de stationnement d'une manière relativement rotative par rapport à celui-ci,
dans lequel une extrémité supérieure du second élément de liaison de frein est reliée fonctionnellement à l'arbre rotatif du frein de stationnement, moyennant quoi une extrémité proximale de la seconde bielle côté actionnement est supportée d'une manière relativement non rotative par rapport à celui-ci, et
dans lequel les première et seconde bielles côté actionnement sont mises en rotation dans un sens d'actionnement de frein et un sens de desserrage de frein autour de la ligne axiale de l' arbre rotatif du frein de stationnement.

3. Véhicule de travail selon la revendication 2,
dans lequel l'arbre rotatif du frein de stationnement est disposé entre le siège du conducteur et une transmission (10), qui est pourvue des première et seconde unités de frein, par rapport à la direction verticale.

4. Véhicule de travail selon la revendication 2 ou 3,
dans lequel l'élément de pression comporte une partie de corps principal pourvue d'un trou central traversant (632a) à travers lequel la bielle côté commande est insérée de manière mobile le long de la ligne axiale, et dans lequel le mécanisme de commande de frein de stationnement comprend une entretoise côté commande (690) qui est supportée par la bielle côté commande de manière relativement mobile le long de sa ligne axiale par rapport à celle-ci de manière à être située entre la partie de corps principal de l'élément de pression et l'élément de retenue, dans lequel, lorsque la bielle côté commande est déplacée dans la direction d'actionnement de frein dans la ligne axiale, l'élément de retenue presse les première et seconde bielles côté actionnement dans les directions d'actionnement de frein autour de la ligne axiale de l'arbre rotatif du frein de stationnement par l'intermédiaire de l'entretoise côté commande et de l'élément de pression.

5. Véhicule de travail selon la revendication 4,
dans lequel la partie de corps principal de l'élément de pression est pourvue, en plus du trou traversant central, d'un premier trou traversant (633a), qui est ouvert dans la direction longitudinale du véhicule sur le premier côté du trou traversant central (632a) dans la direction de la largeur du véhicule de manière à faire face à l'extrémité supérieure de la première bielle côté actionnement, et d'un second trou traversant (634a) qui est situé sur le second côté du trou traversant central dans la direction de largeur du véhicule de manière à faire face à l'extrémité supérieure de la seconde bielle côté actionnement,
dans lequel les première et seconde bielles côté actionnement sont pourvues, au niveau des extrémités supérieures, de parties d'engagement (611, 621) qui sont munies de trous traversants (611a, 621a) de manière à faire face aux premier et second trous traversants, respectivement,
dans lequel l'élément de pression comprend en outre un premier arbre de liaison (636), un second arbre de liaison (637), une première entretoise (638) et une seconde entretoise (639), le premier arbre de liaison ayant une première extrémité insérée dans le premier trou traversant de manière relativement mobile le long d'une ligne axiale par rapport à celui-ci et une seconde extrémité insérée dans le trou traversant de la première bielle côté actionnement de manière relativement mobile le long d'une ligne axiale par rapport à celui-ci, et reliant la partie de corps principal et la première bielle côté actionnement dans un état où elles sont relativement mobiles l'une par rapport à l'autre seulement sur une distance prédéterminée, le second arbre de liaison ayant une première extrémité insérée dans le second trou traversant de manière relativement mobile le long d'une ligne axiale par rapport à celui-ci et une seconde extrémité insérée dans le trou traversant de la seconde bielle côté actionnement de manière relativement mobile le long d'une ligne axiale par rapport à celui-ci, et reliant la partie de corps principal et la seconde bielle côté actionnement dans un état où elles sont relativement mobiles l'une par rapport à l'autre seulement sur une distance prédéterminée, la première entretoise étant montée à l'extérieur du premier arbre de liaison de manière à être située entre la partie de corps principal et la partie d'engagement de la première bielle côté actionnement, ainsi que pour être relativement mobile le long de la ligne axiale par rapport à celui-ci, la seconde entretoise étant montée à l'extérieur du second arbre de liaison de manière à être située entre la partie de corps principal et la partie d'engagement de la seconde bielle côté actionnement, ainsi que pour être relativement mobile le long de la ligne axiale par rapport à celui-ci, et
dans lequel, lorsque la bielle côté commande est déplacée axialement dans la direction d'actionnement de frein dans la direction de ligne axiale en fonction de l'opération de freinage de l'élément de commande de frein de stationnement, l'élément de retenue, qui est déplacé en même temps que la bielle côté commande, presse les première et seconde bielles côté actionnement dans la direction d'actionnement de frein autour de l'arbre rotatif du frein de stationnement par l'intermédiaire de l'entretoise côté commande, la partie de corps principal de l'élément de pression et les première et seconde entretoises, tandis que, lorsque le premier ou le second élément de commande de frein est actionné, la bielle correspondante desdites première et seconde bielles côté actionnement est déplacée dans la direction d'actionnement de frein autour de l'arbre rotatif du frein de stationnement relativement à la partie de corps principal en étant reliée de façon continue à la partie de corps principal par l'intermédiaire de l'arbre correspondant desdits premier et second arbres de liaison.

6. Véhicule de travail selon l'une quelconque des revendications 2 à 5,
dans lequel le premier élément de commande de frein comprend une première tige de support (310) et un premier corps principal de pédale (311), la première tige de support ayant une extrémité proximale supportée par un arbre de commande de frein (425), qui est disposée en dessous d'un marchepied (100) et est alignée dans la direction de largeur du véhicule, d'une manière relativement rotative par rapport à celui-ci, et une extrémité distale s'étendant vers le haut de façon à être au-dessus du marchepied sur le premier côté dans le sens de la largeur du véhicule, le premier corps principal de pédale étant supporté par l'extrémité distale de la première tige de support,
dans lequel le second élément de commande de frein comprend une seconde tige de support (320) et un second corps principal de pédale (321), la seconde tige de support ayant une extrémité proximale supportée par l'arbre de commande de frein d'une manière relativement non rotative par rapport à celui-ci, et une extrémité distale s'étendant vers le haut de façon à être au-dessus du marchepied et à être alignée avec l'extrémité distale de la première tige de support dans la direction de largeur du véhicule, le second corps principal de pédale étant supporté par l'extrémité distale de la seconde tige de support,
dans lequel le premier mécanisme de commande de frein comprend un premier bras de commande de frein (414) et un premier arbre de liaison de frein (413), le premier bras de commande de frein ne pouvant pas tourner par rapport au premier élément de commande de frein autour de la ligne axiale de l'arbre de commande de frein, le premier arbre de liaison de frein ayant une extrémité avant reliée au premier bras de commande de frein et une extrémité arrière reliée au premier bras d'actionnement de frein,
dans lequel le second mécanisme de commande de frein comprend l'arbre de commande de frein, un second bras de commande de frein (424) et un second arbre de liaison de frein (423), le second bras de commande de frein étant disposé sur le second côté de l'arbre de commande de frein dans la direction de la largeur du véhicule dans un état relativement non rotatif par rapport à l'arbre de commande de frein autour son axe, le second arbre de liaison de frein ayant une extrémité avant reliée au second bras de commande de frein et une extrémité arrière reliée au second bras d'actionnement de frein,
dans lequel le premier arbre de liaison de frein est pourvu au niveau de l'extrémité avant d'un trou allongé (413a), le premier bras de commande de frein est muni d'une clavette d'engagement (414a) qui est engagée dans le trou allongé, et le premier bras de commande de frein et le premier arbre de liaison de frein sont reliés l'un à l'autre par l'intermédiaire du trou allongé et de la clavette d'engagement de telle sorte que le premier bras de commande de frein est empêché d'être déplacé au moment où le premier arbre de liaison de frein est déplacé dans la direction d'actionnement de frein le long de la direction de ligne axiale en fonction de l'opération de freinage sur l'élément de commande de frein de stationnement tandis que le premier arbre de liaison de frein est déplacé dans la direction d'actionnement de frein le long de la direction de ligne axiale en fonction de l'opération de freinage sur le premier élément de commande de frein, et
dans lequel le second arbre de liaison de frein est pourvu au niveau de l'extrémité avant d'un trou allongé (423a), le second bras de commande de frein est muni d'une clavette d'engagement (424a) qui est engagée dans le trou allongé, et le second bras de commande de frein et le second arbre de liaison de frein sont reliés l'un à l'autre par l'intermédiaire du trou allongé et de la clavette d'engagement de telle sorte que le second bras de commande de frein est empêché d'être déplacé au moment où le second arbre de liaison de frein est déplacé dans la direction d'actionnement de frein le long de la direction de ligne axiale en fonction de l'opération de freinage sur l'élément de commande de frein de stationnement tandis que le second arbre de liaison de frein est déplacé dans la direction d'actionnement de frein le long de la direction de ligne axiale en fonction de l'opération de freinage sur le second élément de commande de frein.

7. Véhicule de travail selon l'une quelconque des revendications 1 à 4,
dans lequel l'élément de commande de frein de stationnement est supporté de manière à pouvoir tourner autour d'un axe de référence de commande de frein de stationnement s'étendant dans la direction de la largeur du véhicule dans un état où au moins une extrémité distale servant de partie de préhension est exposée vers l'extérieur à partir de l'aile,
dans lequel le mécanisme de commande de frein de stationnement comprend un arbre intermédiaire côté commande de frein de stationnement du (650) qui est supporté de manière à être situé le long de la direction de la largeur du véhicule avec une extrémité intérieure de celui-ci faisant saillie à partir d'une surface latérale intérieure de l'aile dans l'espace, l'arbre intermédiaire côté commande de frein de stationnement tournant autour de la ligne axiale dans la direction d'actionnement de frein lorsque l'élément de commande de frein de stationnement est déplacé autour de l'axe de référence à partir de la position de desserrage de frein vers la position d'actionnement de frein, et
dans lequel la bielle côté commande est reliée fonctionnellement à l'arbre intermédiaire côté commande de frein de stationnement de manière à être déplacée le long de la ligne axiale dans la direction d'actionnement de frein en fonction d'une rotation de l'arbre intermédiaire côté commande de frein de stationnement autour de la ligne axiale dans la direction d'actionnement de frein.
